# EUROPEAN PATENT APPLICATION

(11) **EP 4 656 774 A2**
(43) Date of publication of application: **03.12.2025**
(21) Application number: 25185993.0
(22) Date of filing: 06.11.2023
(51) Int. Cl.: C25B 15/08

(54) **WATER ELECTROLYSIS STACK AND WATER ELECTROLYSIS SYSTEM**

(30) Priority: 19.01.2023 JP 2023006431
(62) Divisional of application: 23917625.8
(71) Applicant: TOYOTA JIDOSHA KABUSHIKI KAISHA, Toyota-shi, Aichi-ken 471-8571 (JP)
(72) Inventor: YOSHIDA, Kohsei, Toyota-shi, 4718571 (JP); FUJITA, Keisuke, Toyota-shi, 4718571 (JP)
(74) Representative: J A Kemp LLP

(57) **Abstract**

Provided is a water electrolysis stack capable of improving durability. The water electrolysis stack includes a cell stack that is formed by stacking a plurality of water electrolysis cells, an inter-cell space is formed between each adjacent ones of the water electrolysis cells in the cell stack, and gas flows into the inter-cell spaces in water electrolysis.

## Description

### [Technical field]

The present application relates to water electrolysis stacks and water electrolysis systems.

### [Background Art]

In recent years, attention has been paid to hydrogen as a CO₂-free energy source. Examples of hydrogen production methods include alkaline water electrolysis, and water electrolysis.

The water electrolysis may be performed using a water electrolysis stack. The water electrolysis stack is usually formed by stacking a plurality of water electrolysis cells each having an electrode body, and a pair of separators between which the electrode body is sandwiched. Such a water electrolysis stack has almost the same structure as a fuel cell stack. Therefore, the use of fuel cells as water electrolysis cells is under study. For example, patent literature 1 discloses a water electrolysis and fuel cell apparatus formed by stacking a plurality of integrated cells of water electrolysis cells and fuel cells.

### [Citation List]

### [Patent Literature]

[Patent Literature 1] JP 2018-165379 A

### [Summary]

### [Technical Problem]

The following problem arises when a fuel cell stack is used as a water electrolysis stack. In a fuel cell stack, when electric power is generated, cooling water flows into spaces that are present between fuel cells to cool the fuel cells. That is, inter-cell spaces that are spaces for cooling water to flow thereinto are formed between the fuel cells. In contrast, in a water electrolysis stack, a reaction water is fed to oxygen electrodes to perform water electrolysis. The temperature of the water electrolysis stack rises by the water electrolysis, whereas this temperature rise can be controlled by the reaction water. Therefore, in a water electrolysis stack, it is not essential that cooling water for temperature adjustment flow into inter-cell spaces.

However, the presence of inter-cell spaces causes the following problem when water electrolysis is performed using a fuel cell stack as a water electrolysis stack. Usually, any inter-cell space is sandwiched between the oxygen electrode of one of each adjacent water electrolysis cells, and the hydrogen electrode of the other one of each adjacent water electrolysis cells. In water electrolysis, because a reaction water is fed to the oxygen electrodes, the pressure of the reaction water is applied to the inter-cell spaces. In addition, because water electrolysis generates hydrogen at the hydrogen electrodes, the pressure of the generated hydrogen is applied to the inter-cell spaces. As described, the pressure towards the internal side in the stacking direction is applied to the inter-cell spaces by water electrolysis, and there is a possibility that such pressure deforms the inter-cell spaces. Because the deformation of the inter-cell spaces leads to deformation of water electrolysis cells which are adjacent to, and form the deformed inter-cell spaces, there is a possibility that the hermetically sealed structure of the water electrolysis cells collapses to impair water tightness or airtightness. As described, there is room for improvement in durability of a water electrolysis stack having inter-cell spaces.

With the foregoing circumstances in view, a primary object of the present disclosure is to provide a water electrolysis stack and a water electrolytic system that are capable of improving durability.

### [Solution to Problem]

The present disclosure is provided with the following aspects for solving the aforementioned problems.

The first aspect is a water electrolysis stack comprising: a cell stack that is formed by stacking a plurality of water electrolysis cells, wherein an inter-cell space is formed between each adjacent ones of the water electrolysis cells in the cell stack, and gas flows through the inter-cell spaces in water electrolysis.

The second aspect is the water electrolysis stack in the first aspect, wherein the water electrolysis cells each comprise: an electrode body having an electrolyte membrane, an oxygen electrode catalyst layer that is disposed on one side of the electrolyte membrane, and a hydrogen electrode catalyst layer that is disposed on another side of the electrolyte membrane, the electrolyte membrane being sandwiched between the oxygen and hydrogen electrode catalyst layers; an oxygen electrode separator that is disposed on the electrode body on a side of the oxygen electrode catalyst layer; and a hydrogen electrode separator that is disposed on the electrode body on a side of the hydrogen electrode catalyst layer, in each of the water electrolysis cells, an oxygen electrode is formed between the electrode body and the oxygen electrode separator, and a hydrogen electrode is formed between the electrode body and the hydrogen electrode separator, in said each adjacent ones of the water electrolysis cells, the oxygen electrode separator of one of the water electrolysis cells and the hydrogen electrode separator of another one of the water electrolysis cells are adjacent to each other, and the inter-cell space is formed between the oxygen electrode separator and the hydrogen electrode separator, the water electrolysis stack further comprising: a first communicating hole that is connected to the hydrogen electrodes, and formed communicably in a stacking direction; a second communicating hole that is connected to the inter-cell spaces, and formed communicably in the stacking direction; and a first channel that connects the first communicating hole and the second communicating hole to each other, and hydrogen generated at the hydrogen electrodes by water electrolysis flows from the first communicating hole via the first channel to the second communicating hole to flow to the inter-cell spaces.

The third aspect is the water electrolysis stack in the second aspect further comprising: a first end plate; and a second end plate, the cell stack being sandwiched between the first and second end plates in the stacking direction, wherein an opening for the first communicating hole and an opening for the second communicating hole are arranged in the first end plate, and the first channel connects, on the first end plate, the opening of the first communicating hole and the opening of the second communicating hole.

The fourth aspect is the water electrolysis stack in the third aspect further comprising: a plurality of the first communicating holes; and a plurality of the second communicating holes, wherein the openings for the first communicating holes, and the openings for the second communicating holes are arranged in the first end plate, the first channel connects, on the first end plate, one of the openings for the first communicating holes and one of the openings for the second communicating holes to each other, and among the openings for the first communicating holes, (an) opening(s) that remain(s) unconnected to the first channel is/are sealed.

The fifth aspect is the water electrolysis stack in the fourth aspect wherein the first communicating holes are two and the second communicating holes are two in number.

The sixth aspect is the water electrolysis stack in the fifth aspect further comprising: a reaction water feeding communicating hole; and a reaction water discharge communicating hole, the reaction water feeding and discharge communicating holes being connected to the oxygen electrodes, and formed communicably in the stacking direction, wherein hydrogen that flows into the inter-cell spaces is discharged via one of the second communicating holes which is closest to the reaction water feeding communicating hole.

The seventh aspect is the water electrolysis stack in the fifth aspect further comprising: a reaction water feeding communicating hole; and a reaction water discharge communicating hole, the reaction water feeding and discharge communicating holes being connected to the oxygen electrodes, and formed communicably in the stacking direction, wherein hydrogen that flows into the inter-cell spaces is discharged via one of the second communicating holes which is closest to the reaction water discharge communicating hole.

The eighth aspect is a water electrolysis system comprising: the water electrolysis stack according to any one of the second to seventh aspects; a second channel; and a hydrogen feeder that is disposed at the second channel, wherein in the water electrolysis stack, the first communicating holes are two, and the second communicating holes are two in number, the second channel connects the first communicating holes to each other, and hydrogen flows from one of the first communicating holes via the second channel into another one of the first communicating holes by use of the hydrogen feeder.

The ninth aspect is the water electrolysis system in the eighth aspect, wherein the water electrolysis stack further comprising: a reaction water feeding communicating hole; and a reaction water discharge communicating hole, the reaction water feeding and discharge communicating holes being connected to the oxygen electrodes, and formed communicably in the stacking direction, wherein hydrogen that flows into the inter-cell spaces is discharged via one of the second communicating holes which is closest to the reaction water feeding communicating hole.

The tenth aspect is the water electrolysis system in the eighth or ninth aspect further comprising: a gas-liquid separator that is disposed at the second channel on an upstream side of the hydrogen feeder.

The eleventh aspect is a water electrolysis system comprising: the water electrolysis stack according to any one of the second to seventh aspects; a gas-liquid separator; a third channel; and an extrusion water feeder that is disposed at the third channel, wherein in the water electrolysis stack, the first communicating holes are two, and the second communicating holes are two in number, the gas-liquid separator is disposed at the first channel, the third channel connects the gas-liquid separator, and one of the first communicating holes which is unconnected to the first channel, an extrusion water that is fed from the extrusion water feeder flows into the hydrogen electrodes via the one of the first communicating holes, is discharged via another one of the first communicating holes while accompanying hydrogen generated at the hydrogen electrodes by water electrolysis, reaches, from the other one of the first communicating holes, the gas-liquid separator disposed at the first channel, and flows into the third channel with hydrogen being separated therefrom at the gas-liquid separator, and hydrogen separated at the gas-liquid separator flows into the inter-cell spaces via the one of the second communicating holes.

The twelfth aspect is a water electrolysis system comprising: the water electrolysis stack according to claim 1; and a gas feeder that feeds the gas to the inter-cell spaces.

The thirteenth aspect is a water electrolysis stack having a cell stack that is formed by stacking a plurality of water electrolysis cells, wherein the water electrolysis cells each comprise: an electrode body having an electrolyte membrane, an oxygen electrode catalyst layer that is disposed on one side of the electrolyte membrane, and a hydrogen electrode catalyst layer that is disposed on another side of the electrolyte membrane, the electrolyte membrane being sandwiched between the oxygen and hydrogen electrode catalyst layers; an oxygen electrode separator that is disposed on the electrode body on a side of the oxygen electrode catalyst layer; and a hydrogen electrode separator that is disposed on the electrode body on a side of the hydrogen electrode catalyst layer, in each of the water electrolysis cells, an oxygen electrode is formed between the electrode body and the oxygen electrode separator, and a hydrogen electrode is formed between the electrode body and the hydrogen electrode separator, in said each adjacent ones of the water electrolysis cells, the oxygen electrode separator of one of the water electrolysis cells and the hydrogen electrode separator of another one of the water electrolysis cells are adjacent to each other, and the inter-cell space is formed between the oxygen electrode separator and the hydrogen electrode separator, the water electrolysis stack comprises: a reaction water feeding communicating hole; a reaction water discharge communicating hole, the reaction water feeding and discharge communicating holes being connected to the oxygen electrodes, and formed communicably in a stacking direction; two second communicating holes that are connected to the inter-cell spaces, and formed communicably in the stacking direction; and a fourth channel that connects either one of the reaction water feeding communicating hole and the reaction water discharge communicating hole, and one of the second communicating holes, and a reaction water flows via the fourth channel into the one of the second communicating hole to flow into the inter-cell spaces.

The fourteenth aspect is a water electrolysis system comprising: a water electrolysis stack having a cell stack that is formed by stacking a plurality of water electrolysis cells; a fifth channel; and an extrusion water feeder that is disposed at the fifth channel, wherein the water electrolysis cells each comprise: an electrode body having an electrolyte membrane, an oxygen electrode catalyst layer that is disposed on one side of the electrolyte membrane, and a hydrogen electrode catalyst layer that is disposed on another side of the electrolyte membrane, the electrolyte membrane being sandwiched between the oxygen and hydrogen electrode catalyst layers; an oxygen electrode separator that is disposed on the electrode body on a side of the oxygen electrode catalyst layer; and a hydrogen electrode separator that is disposed on the electrode body on a side of the hydrogen electrode catalyst layer, in each of the water electrolysis cells, an oxygen electrode is formed between the electrode body and the oxygen electrode separator, and a hydrogen electrode is formed between the electrode body and the hydrogen electrode separator, in said each adjacent ones of the water electrolysis cells, the oxygen electrode separator of one of the water electrolysis cells and the hydrogen electrode separator of another one of the water electrolysis cells are adjacent to each other, and the inter-cell space is formed between the oxygen electrode separator and the hydrogen electrode separator, the water electrolysis stack comprises: two first communicating holes that are connected to the hydrogen electrodes, and formed communicably in a stacking direction; two second communicating holes that are connected to the inter-cell spaces, and formed communicably in the stacking direction; and a first channel that connects one of the first communicating holes and one of the second communicating holes to each other, the fifth channel that connects another one of the first communicating holes which is unconnected to the first channel, and another one of the second communicating holes which is unconnected to the first channel, and an extrusion water that is fed from the extrusion water feeder flows from the other one of the second communicating holes which is unconnected to the first channel via the fifth channel into the other one of the first communicating holes which is unconnected to the first channel to flow into the inter-cell spaces.

### [Advantageous Effects]

According to the present disclosure, deformation of inter-cell spaces can be prevented to improve durability of a water electrolysis stack.

### [Brief Description of Drawings]

[Fig. 1] Fig. 1 is a perspective view of a water electrolysis stack 100.
[Fig. 2] Fig. 2 is an exploded perspective view of a water electrolysis cell 10.
[Fig. 3] Fig. 3 is a partial cross-sectional view of a cell stack 20 if the cell stack 20 were cut in the stacking direction, and focuses on an inter-cell space 21.
[Fig. 4] Fig. 4 is a schematic view of a first end plate 31 in a view in the stacking direction.
[Fig. 5] Fig. 5 is a schematic view illustrating how the inter-cell space 21 deforms.
[Fig. 6] Fig. 6 is a perspective view of a water electrolysis stack 200.
[Fig. 7] Fig. 7 is a cross-sectional view focusing on a first channel 211.
[Fig. 8] Fig. 8 is a cross-sectional view focusing on a first channel 310.
[Fig. 9] Fig. 9 is an exploded perspective view focusing on the cell stack 20 and the first end plate 31 in the water electrolysis stack 100.
[Fig. 10] Fig. 10 is an exploded perspective view focusing on the cell stack 20 and the first end plate 31 in a water electrolysis stack 400.
[Fig. 11] Fig. 11 is a perspective view of a water electrolysis stack 500.
[Fig. 12] Fig. 12 is a block diagram of a water electrolysis system 1000.
[Fig. 13] Fig. 13 is a block diagram of a water electrolysis system 2000.
[Fig. 14] Fig. 14 is a block diagram of a water electrolysis system 3000.
[Fig. 15] Fig. 15 is a block diagram of a water electrolysis system 4000.
[Fig. 16] Fig. 16 is a block diagram of a water electrolysis system 5000.
[Fig. 17] Fig. 17 is a perspective view of a water electrolysis stack 600.
[Fig. 18] Fig. 18 is a block diagram of a water electrolysis system 6000.
[Fig. 19] Fig. 19 is a block diagram of a water electrolysis system 7000.

### [Description of Embodiments]

### (A) Typical Water Electrolysis Stack

First, prior to description of a water electrolysis stack according to the present disclosure, a typical water electrolysis stack is described using a water electrolysis stack 100 that is one example.

### [Water Electrolysis Stack 100]

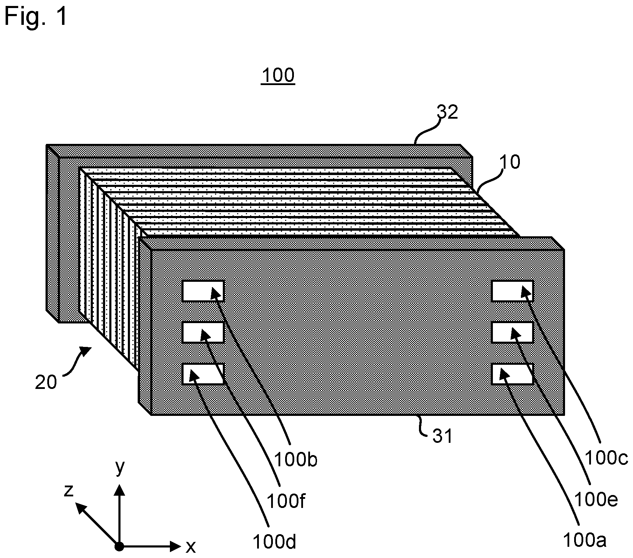

Fig. 1 is a perspective view of the water electrolysis stack 100. Here, in Fig. 1, the x direction is defined as a longer transverse direction, the y direction is defined as a shorter transverse direction, and the z direction is defined as a stacking direction.

The water electrolysis stack 100 has a cell stack 20 formed by stacking a plurality of water electrolysis cells 10. The water electrolysis stack 100 is provided with a first end plate 31 and a second end plate 32 between which the cell stack 20 is sandwiched in the stacking direction.

In the water electrolysis stack 100, any plates having predetermined functions may be disposed between the first end plate 31 and the cell stack 20 if necessary. Likewise, any plates having predetermined functions may be disposed between the second end plate 32 and the cell stack 20 if necessary. Examples of such plates include a terminal plate, an insulating plate, and a pressure plate. Terminal plates as used herein are provided with terminals that are to be connected to an external power source. Voltage application from the connected power source to the terminal plates causes voltage to be applied to the cell stack 20 disposed between the terminal plates. Insulating plates as used herein have the function of insulating the terminal plates and the end plates. Pressure plates as used herein have the function of applying a constraint force to the cell stack 20.

### <Water Electrolysis Cell 10>

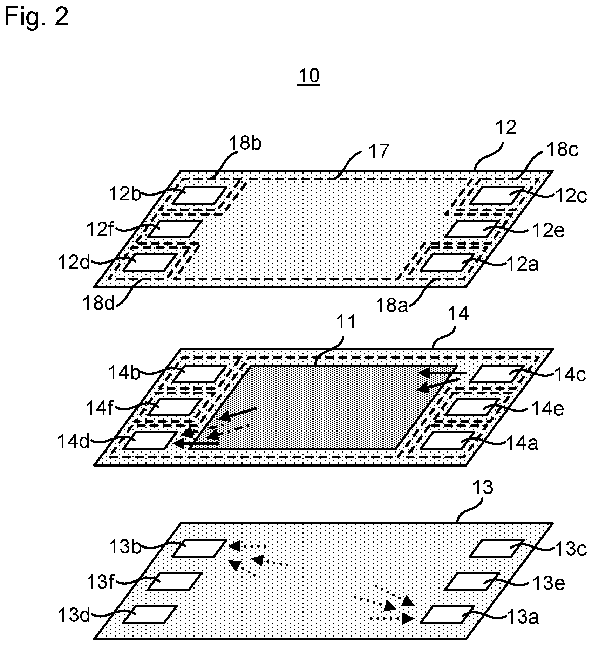

The water electrolysis cells 10 are devices with which water electrolysis is performed. Fig. 2 is an exploded perspective view of any one of the water electrolysis cells 10. As shown in Fig. 2, the water electrolysis cell 10 is provided with an electrode body 11, and a pair of separators (oxygen electrode separator 12 and hydrogen electrode separator 13) disposed on both sides of the electrode body 11. A frame-shaped member 14 is disposed around the electrode body 11.

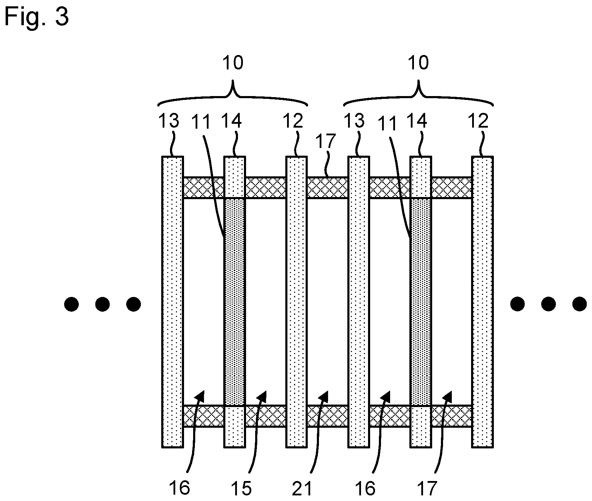

Here, in the water electrolysis cell 10, an oxygen electrode 15 is formed between the electrode body 11 and the oxygen electrode separator 12, and a hydrogen electrode 16 is formed between the electrode body 11 and the hydrogen electrode separator 13 (see Fig. 3). The oxygen electrode 15 and the hydrogen electrode 16 are the spaces where fluid may flow. Normally, a reaction water (water) flows into the oxygen electrode 15, and hydrogen flows into the hydrogen electrode 16.

### (Electrode Body 11)

The structure of the electrode body 11 is as follows: an oxygen electrode catalyst layer is disposed on one side of an electrolyte membrane, a hydrogen electrode catalyst layer is disposed on the other side of the electrolyte membrane, and the electrolyte membrane is sandwiched between the oxygen and hydrogen electrode catalyst layers. In other words, the electrode body 11 has the electrolyte membrane, the oxygen electrode catalyst layer disposed on one side of the electrolyte membrane, and the hydrogen electrode catalyst layer disposed on the other side of the electrolyte membrane. The electrode body 11 is a member in the form of sheet that has an approximately rectangular shape in a view in the stacking direction. The shape of the electrode body 11 is not limited to this, but may be appropriately set according to purposes. For example, the shape of the electrode body 11 may be a polygon with five or more sides, and may be a circle or an ellipse.

The electrolyte membrane is a member in the form of sheet that has proton conductivity. The electrolyte membrane contains a proton-conducting ionomer. The kind of a proton-conducting ionomer as used herein is not particularly limited. Examples of such a proton-conducting ionomer include fluoroalkyl polymers such as polytetrafluoroethylene, and perfluoroalkyl sulfonic acid polymers. A perfluoroalkyl sulfonic acid polymer may be selected in view of durability.

The oxygen electrode catalyst layer is a member in the form of sheet that contains an oxygen electrode catalyst that helps water electrolysis generate oxygen. An oxygen electrode catalyst as used herein is not particularly limited, and examples thereof include metal catalysts. Examples of a metal catalyst as used herein include metal catalysts having compositions including Pt, Ru, Rh, Os, Ir, Pd and Au. A metal catalyst as used herein may be an oxide of any of the foregoing metals, and is typically platinum or a platinum alloy. An oxygen electrode catalyst as used may be an electrically conductive support (metal-supported catalyst) supporting a metal catalyst. The kind of a support as used herein is not particularly limited, but an example thereof is a carbon support. The oxygen electrode catalyst layer may contain a proton-conducting ionomer. A proton-conducting ionomer as used herein is not particularly limited, and examples thereof include the aforementioned proton-conducting ionomers.

The hydrogen electrode catalyst layer is a member in the form of sheet that contains a hydrogen electrode catalyst that helps water electrolysis generate hydrogen. A hydrogen electrode catalyst as used herein is not particularly limited, and examples thereof include metal catalysts. Examples of a metal catalyst as used herein include metal catalysts having compositions including Pt, Ru, Rh, Os, Ir, Pd and Au. A metal catalyst as used herein may be an oxide of any of the foregoing metals, and is typically platinum or a platinum alloy. A hydrogen electrode catalyst as used herein may be an electrically conductive support (metal-supported catalyst) supporting a metal catalyst. The kind of a support as used herein is not particularly limited, but an example thereof is a carbon support. The hydrogen electrode catalyst layer may contain a proton-conducting ionomer. A proton-conducting ionomer as used herein is not particularly limited, and examples thereof include the aforementioned proton-conducting ionomers.

### (Oxygen Electrode Separator 12 and Hydrogen Electrode Separator 13)

The oxygen electrode separator 12 and the hydrogen electrode separator 13 are members in the form of sheet that have approximately rectangular shapes in a view in the stacking direction. The shapes of the oxygen electrode separator 12 and the hydrogen electrode separator 13 are not limited to this, but may be appropriately set according to purposes. For example, the shapes of the oxygen electrode separator 12 and the hydrogen electrode separator 13 may be polygons with five or more sides each, and may be circles or ellipses. The oxygen electrode separator 12 is disposed on the oxygen electrode catalyst layer side of the electrode body 11. The hydrogen electrode separator 12 is disposed on the hydrogen electrode catalyst layer side of the electrode body 11. The oxygen electrode separator 12 and the hydrogen electrode separator 13 are formed of conductive members. Examples of the material of conductive members as used herein include resin materials including carbon materials; and metallic materials such as iron, copper, stainless steel, and titanium.

The oxygen electrode separator 12 is provided with first holes 12a and 12b, a reaction water feeding hole 12c, a reaction water discharge hole 12d, and second holes 12e and 12f along both the ends thereof in the longitudinal direction. The first holes 12a and 12b are holes for discharging, from the water electrolysis cell 10 (hydrogen electrode 16), hydrogen generated by water electrolysis. The reaction water feeding hole 12c is a hole for feeding the reaction water to the water electrolysis cell 10 (oxygen electrode 15). The reaction water discharge hole 12d is a hole for discharging the reaction water from the water electrolysis cell 10 (oxygen electrode 15).

The hydrogen electrode separator 13 is provided with holes having the same functions as the holes of the oxygen electrode separator 12. In other words, the hydrogen electrode separator 13 is provided with first holes 13a and 13b, a reaction water feeding hole 13c, a reaction water discharge hole 13d, and second holes 13e and 13f along both the ends thereof in the longitudinal direction.

Predetermined channels are formed on the faces of the oxygen electrode separator 12 and the hydrogen electrode separator 13 that are on the electrode body 11 sides. Specifically, a reaction water channel (not shown) is formed on the face of the oxygen electrode separator 12 that is on the electrode body 11 side. This reaction water channel guides the reaction water fed from the reaction water feeding hole 12c to the oxygen electrode 14 towards the electrode body 11, and guides, towards the reaction water discharge hole 12d, the reaction water guided towards the electrode body 11. A hydrogen channel (not shown) that guides hydrogen generated at the hydrogen electrode 15 by water electrolysis towards the first holes 13a and 13b is formed on the face of the hydrogen electrode separator 13 that is on the electrode body 11 side.

A sealing member 17 is disposed on the outer face of the oxygen electrode separator 12 or the hydrogen electrode separator 13 (face opposite to the electrode body 11 side) all over the second holes (the second holes 12e and 12f in the case of the oxygen electrode separator, and the second holes 13e and 13f in the case of the hydrogen electrode separator), and the central portion (area corresponding to the position of the electrode body 11). In Fig. 2, the sealing member 17 is disposed on the outer face of the oxygen electrode separator 12. Disposing the sealing member 17 may lead to a suppressed leakage of any fluid flowing into an inter-cell space 21 to the outside. The inter-cell space 21 will be described later.

Sealing members 18a to 18d are disposed on the outer face of the oxygen electrode separator 12 or the hydrogen electrode separator 13 separately over the first holes, the reaction water feeding hole, and the reaction water discharge hole, respectively. In Fig. 2, the sealing members 18a to 18d are disposed on the outer face of the oxygen electrode separator 12. Disposing the sealing members 18a to 18d may lead to a suppressed leakage of the reaction water, hydrogen, or oxygen to the outside between the adjacent water electrolysis cells 10.

### (Frame-Shaped Member 14)

The frame-shaped member 14 is a member in the form of sheet that has an approximately rectangular shape in a view in the stacking direction. The shape of the frame-shaped member 14 is not limited to this, but may be appropriately set according to purposes. For example, the shape of the frame-shaped member 14 may be a polygon with five or more sides, and may be a circle or an ellipse. The frame-shaped member 14 is disposed around the electrode body 11. That is, the frame-shaped member 14 has an opening for disposing the electrode body 11. The material of the frame-shaped member 14 is not particularly limited, but an example thereof is an insulating resin.

Like the oxygen electrode separator 12 and the hydrogen electrode separator 13, the frame-shaped member 14 is provided with first holes 14a and 14b, a reaction water feeding hole 14c, a reaction water discharge hole 14d, and second holes 14e and 14f along both the ends thereof in the longitudinal direction.

A sealing member (dashed line in Fig. 2) is disposed on the face of the frame-shaped member 14 that is on the oxygen electrode separator 12 side all over the reaction water feeding hole 14c, the reaction water discharge hole 14d, and the electrode body 11 (opening of the frame-shaped member 14). This may lead to a suppressed leakage of the reaction water and oxygen flowing into the oxygen electrode 15 to the outside. Sealing members (dashed line in Fig. 2) are also disposed on the face of the frame-shaped member 14 that is on the oxygen electrode separator 12 side separately over the first holes 14a and 14b, and the second holes 14e and 14f, respectively.

A sealing member (not shown) is disposed on the face of the frame-shaped member 14 on the hydrogen electrode separator 13 side all over the first holes 14a and 14b, and the electrode body 11 (opening of the frame-shaped member 14). This may lead to a suppressed leakage of hydrogen flowing into the hydrogen electrode 16 to the outside. Sealing members (not shown) are also disposed on the face of the frame-shaped member 14 on the hydrogen electrode separator 13 side separately over the reaction water feeding hole 14c, the reaction water discharge hole 14d, and the second holes 14e and 14f, respectively.

### (Water Electrolysis Reaction in Water Electrolysis Cell 10)

A water electrolysis reaction in the water electrolysis cell 10 will be described. In the water electrolysis cell 10, reaction water feeding to the oxygen electrode 15, and voltage application cause a water electrolysis reaction at each of the catalyst layers. First, a reaction water is fed to the oxygen electrode catalyst layer (solid arrows in Fig. 2), and oxygen and protons are generated by the water electrolysis reaction. The generated oxygen and the reaction water are together guided towards the reaction water channel formed on the oxygen electrode separator 12, and are extracted to the outside via the reaction water discharge hole (dashed-dotted arrows in Fig. 2). The protons generated at the oxygen electrode catalyst layer permeate through the electrolyte membrane to reach the hydrogen electrode catalyst layer. The reached protons are bound to electrons to generate hydrogen at the hydrogen electrode 16. The generated hydrogen is guided towards the hydrogen channel formed on the hydrogen electrode separator 13 to be discharged to the outside via the first holes (dotted arrows in Fig. 2).

### <Cell Stack 20>

The cell stack 20 is formed by stacking a plurality of the water electrolysis cells 10. The number of the stacked water electrolysis cells 10 is not particularly limited, and may be appropriately set according to objective performance. For example, the number of the water electrolysis cells 10 in the cell stack 20 may be 10 to 100.

Here, in the cell stack 20, any of the inter-cell spaces 21 are formed between each adjacent water electrolysis cells 10. Specifically, in each adjacent water electrolysis cells 10, the oxygen electrode separator 12 of one water electrolysis cell 10, and the hydrogen electrode separator 13 of the other water electrolysis cell 10 are adjacent to each other, and the inter-cell space 21 is formed between the oxygen electrode separator 12 and the hydrogen electrode separator 13. The outer edges of the inter-cell space 21 are surrounded by the sealing member 17 whereby water tightness or airtightness is secured. The inter-cell space 21 is formed between each two water electrolysis cells 10, and may be also formed between the water electrolysis cell 10 disposed on either end face of the cell stack 20 and the corresponding end plate (first end plate 31 or second end plate 32).

Fig. 3 is a partial cross-sectional view of the cell stack 20 if the cell stack 20 were cut in the stacking direction, and focuses on the inter-cell space 21. As shown in Fig. 3, the inter-cell space 21 is the space formed between the adjacent water electrolysis cells 10. As described above, the oxygen electrode separator 12 has the sealing member 17 disposed on the outer face thereof (face opposite to the electrode body 11 side) so as to be all over the central portion and the second holes 12e and 12f. Stacking, on this sealing member 17, the hydrogen electrode separator 13 of the water electrolysis cell 10 that is adjacent to this oxygen electrode separator 12 results in formation of the inter-cell space 21 inside the sealing member 17. As described, since the outer edges of the inter-cell space 21 are sealed with the sealing member 17, the structure of the inter-cell space 21 is as follows: any fluid flowing inside the inter-cell space 21 does not leak to the outside.

### <Water Electrolysis Stack 100>

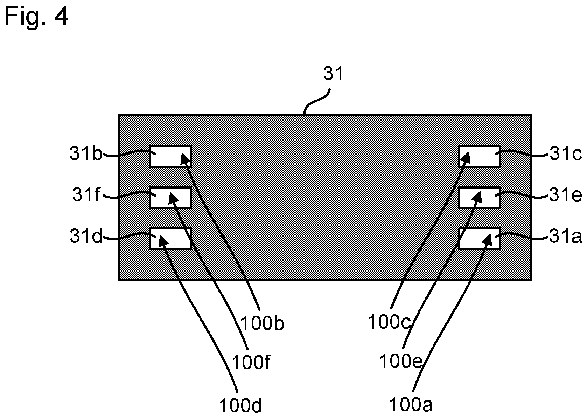

The water electrolysis stack 100 is provided with first communicating holes 100a and 100b, a reaction water feeding communicating hole 100c, a reaction water discharge communicating hole 100d, and second communicating holes 100e and 100f. The first communicating holes 100a and 100b are the communicating holes connected to the hydrogen electrodes 16 of the water electrolysis cells 10, and formed communicably in the stacking direction. The reaction water feeding communicating hole 100c and the reaction water discharge communicating hole 100d are the communicating holes connected to the oxygen electrodes 15 of the water electrolysis cells 10, and formed communicably in the stacking direction. The second communicating holes 100e and 100f are the communicating holes connected to the inter-cell spaces 21, and formed communicably in the stacking direction. These communicating holes have the function as a manifold. Fig. 4 is a schematic view of the first end plate 31 in a view in the stacking direction.

Typically, hydrogen generated at the hydrogen electrodes of the water electrolysis cells 10 flows through the first communicating holes 100a and 100b. The first communicating hole 100a communicates with the first holes 12a, 13a and 14a of the water electrolysis cells 10, and penetrates the first end plate 31. Accordingly, an opening 31a for the first communicating hole 100a is arranged in the first end plate 31. The first communicating hole 100b communicates with the first holes 12b, 13b and 14b of the water electrolysis cells 10, and penetrates the first end plate 31. Accordingly, an opening 31b for the first communicating hole 100b is arranged in the first end plate 31. In the water electrolysis stack 100, typically, hydrogen is extracted via the openings 31a and 31b. Typically, none of the first communicating holes 100a and 100b penetrates the second end plate 32.

As described above, the first communicating holes 100a and 100b are connected to the hydrogen electrodes 16 of the water electrolysis cells 10. This means that fluid may flow between either one of the first communicating holes 100a and 100b, and the hydrogen electrodes 16. As described above, the sealing member (not shown) is disposed on the face of each of the frame-shaped members 14 that is on the hydrogen electrode separator 13 side all over the first holes 14a and 14b, and the electrode body 11 (opening of the frame-shaped member 14). Disposing the sealing member as described allows fluid to flow between either one of the first communicating holes 100a and 100b, and the hydrogen electrodes 16.

Typically, the reaction water to be fed to the water electrolysis cells 10 flows through the reaction water feeding communicating hole 100c. Typically, the reaction water discharged from the water electrolysis cells 10, and oxygen generated at the oxygen electrodes 15 by water electrolysis flow through the reaction water discharge communicating hole 100d. The reaction water feeding communicating hole 100c communicates with the reaction water feeding holes 12c, 13c and 14c of the water electrolysis cells 10, and penetrates the first end plate 31. Accordingly, an opening 31c for the reaction water feeding communicating hole 100c is arranged in the first end plate 31. The reaction water discharge communicating hole 100d communicates with the reaction water discharge holes 12d, 13d and 14d of the water electrolysis cells 10, and penetrates the first end plate 31. Accordingly, an opening 31d for the reaction water discharge communicating hole 100d is arranged in the first end plate 31. In the water electrolysis stack 100, usually, a reaction water is fed via the opening 31c, and the reaction water and oxygen are discharged via the opening 31d. Typically, none of the reaction water feeding communicating hole 100c and the reaction water discharge communicating hole 100d penetrates the second end plate 32.

The reaction water feeding communicating hole 100c and the reaction water discharge communicating hole 100d are connected to the oxygen electrodes 15 of the water electrolysis cells 10. This means that fluid may flow through either one of the reaction water feeding communicating hole 100c and the reaction water discharge communicating hole 100d, and the respective oxygen electrodes 15. As described above, the sealing member (dashed line in Fig. 2) is disposed on the face of each of the frame-shaped members 14 that is on the oxygen electrode separator 12 side all over the reaction water feeding hole 14c, the reaction water discharge hole 14d, and the electrode body 11 (opening of the frame-shaped member 14). Disposing the sealing member as described allows fluid to flow between either one of the reaction water feeding communicating hole 100c and the reaction water discharge communicating hole 100d, and the oxygen electrodes 15.

The second communicating hole 100e communicates with the second holes 12e 13e and 14e of the water electrolysis cells 10, and penetrates the first end plate 31. Accordingly, an opening 31e for the second communicating hole 100e is arranged in the first end plate 31. The second communicating hole 100f communicates with the second holes 12f, 13f and 14f of the water electrolysis cells 10, and penetrates the first end plate 31. Accordingly, an opening 31f for the second communicating hole 100f is arranged in the first end plate 31. Typically, none of the second communicating holes 100e and 100f penetrates the second end plate 32. In the water electrolysis stack 100, none of the second communicating holes 100e and 100f, and the inter-cell spaces 21 are usually used, the reason for which will be described later.

The second communicating holes 100e and 100f are connected to the inter-cell spaces 21. This means that fluid may flow between either one of the second communicating holes 100e and 100f, and the inter-cell spaces 21. As described above, the sealing member 17 is disposed on the outer face of each of the oxygen electrode separators 12 all over the second holes 12e and 12f, and the central portion. Disposing the sealing member 17 as described allows fluid to flow between either one of the second communicating holes 100e and 100f, and the inter-cell spaces 21.

As shown in Fig. 4, typically, the openings 31a, 31c and 31e are arranged along the right end of the first end plate 31 (one end in the longer transverse direction). Typically, the openings 31b, 31d and 31f are arranged along the left end of the first end plate 31 (the other end in the longer transverse direction). The order of the arrangement of the openings 31a, 31c and 31e are, from the top (from one side in the shorter transverse direction), the openings 31c, 31e and 31a. In contrast, the order of the arrangement of the openings 31b, 31d and 31f are, from the top (from the one side in the shorter transverse direction), the openings 31b, 31f and 31d. As described, the openings 31a, 31c and 31e are arranged at the positions opposite to the openings 31b, 31d and 31f, respectively. The arrangement positions of the openings are not limited to this, but may be appropriately set according to purposes.

### <Problems with Water Electrolysis Stack 100>

A method of performing water electrolysis by the use of the water electrolysis stack 100 will be described. First, while voltage is applied to the water electrolysis stack 100, a reaction water is fed to the reaction water feeding communicating hole 100c. The fed reaction water is fed to the oxygen electrode 15 of each of the water electrolysis cells 10. Then, water electrolysis occurs in each of the water electrolysis cells 10. Oxygen generated at the oxygen electrodes 15 by water electrolysis, and the reaction water are together discharged via the reaction water discharge communicating hole 100d. Hydrogen generated at the hydrogen electrodes 16 by water electrolysis is discharged via the first communicating holes 100a and 100b.

As described, none of the inter-cell spaces 21, and the second communicating holes 100e and 100f are usually used when water electrolysis is performed using the water electrolysis stack 100, the reason for which is as follows.

In generation of electricity in fuel cell stacks, water, and electric power are generated from hydrogen and oxygen. In contrast, in water electrolysis in water electrolysis stacks, hydrogen and oxygen are generated from water, and electric power. As described, generation of electricity, and water electrolysis are in inverse relationship with each other. For this, water electrolysis stacks have almost the same structure as fuel cell stacks. Therefore, the use of fuel cell stacks as water electrolysis stacks is under study.

When electricity is generated in a fuel cell stack, the temperature of the fuel cell stack rises by the generation of electricity. Therefore, cooling water is fed to inter-cell spaces for controlling the temperature of the fuel cell stack. As described, inter-cell spaces are spaces where cooling water for temperature adjustment flows into the fuel cell stack. In contrast, in a water electrolysis stack, as described above, a reaction water is fed to oxygen electrodes to perform water electrolysis. The temperature of the water electrolysis stack rises by the water electrolysis, whereas this temperature rise can be controlled by the reaction water. Therefore, it is not necessary that cooling water for temperature adjustment further flow into inter-cell spaces. This is why none of the inter-cell spaces 21, and the second communicating holes 100e and 100f are normally used in water electrolysis in the water electrolysis stack 100.

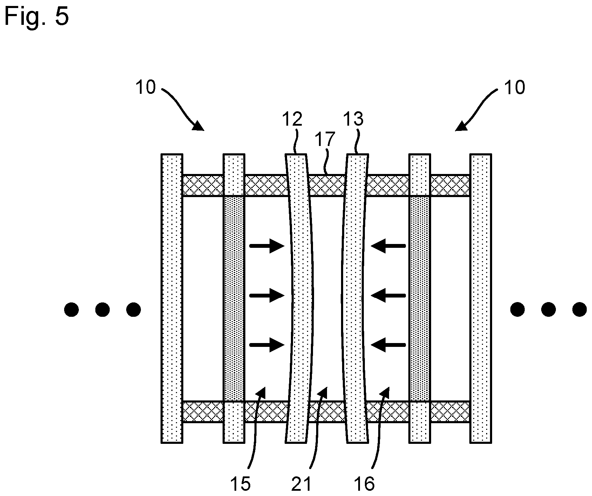

However, the presence of the inter-cell spaces causes the following problem when water electrolysis is performed using the water electrolysis stack 100 provided with the inter-cell spaces 21. Fig. 5 is a schematic view illustrating how the inter-cell space 21 deforms. Fig. 5 corresponds to Fig. 3.

As shown in Fig. 5, because the reaction water is fed to the oxygen electrode 15 of one of the water electrolysis cells 10 between which the inter-cell space 21 is sandwiched, the pressure of the reaction water is applied to the oxygen electrode separator 12 which forms the inter-cell space 21. In addition, because water electrolysis generates hydrogen at the hydrogen electrode 16 of the other one of the water electrolysis cells 10 between which the inter-cell space 21 is sandwiched, the pressure of the generated hydrogen is applied to the hydrogen electrode separator 13 which forms the inter-cell space 21. As described, the pressure towards the internal side in the stacking direction is applied to the inter-cell space 21 by water electrolysis. In contrast, the pressure in the inter-cell space 21 is usually smaller than either one of these pressures since no fluid is fed to the inter-cell space 21. Therefore, there is a possibility that the differential pressure between the inter-cell space 21, and either one of the oxygen electrode 15 and the hydrogen electrode 16 deforms the inter-cell space 21. Specifically, there is a possibility that the oxygen electrode separator 12 or the hydrogen electrode separator 13 which forms the inter-cell space 21 deforms. When the inter-cell space 21 deforms, there is a possibility that the hermetically sealed structure in the water electrolysis cells 10 by the sealing members collapses, and the reaction water, oxygen, and hydrogen leak from the water electrolysis cells 10 to the outside. That is, there is a possibility that the water tightness or airtightness of the water electrolysis cells 10 is impaired.

### (B) Water Electrolysis Stack according to Present Disclosure

As described, the presence of inter-cell spaces causes the problem of degraded durability of a water electrolysis stack when water electrolysis is performed using the water electrolysis stack having the inter-cell spaces. For such a problem, the present inventors found that in water electrolysis, gas flowing into the inter-cell spaces may lead to suppressed deformation of the inter-cell spaces to improve the durability of the water electrolysis stack. Hereinafter a water electrolysis stack according to the present disclosure will be described using each embodiment.

### [First Embodiment: Water Electrolysis Stack 200]

A water electrolysis stack 200 that is the first embodiment will be described. The water electrolysis stack 200 has a first channel 211 connecting the opening 31b for the first communicating hole 100b, and the opening 31f for the second communicating hole 100f to each other. In other words, the water electrolysis stack 200 has the mode of providing the water electrolysis stack 100 with the first channel 211. Hereinafter, points different from the water electrolysis stack 100 will be only described.

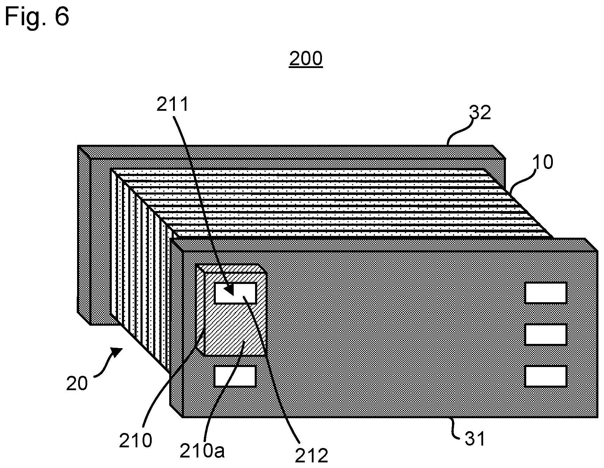

Fig. 6 is a perspective view of the water electrolysis stack 200. As shown in Fig. 6, the water electrolysis stack 200 is provided with a cover member 210 on the first end plate 31. The cover member 210 has an approximately rectangular parallelepiped shape having a cavity thereinside, and has an opening on the face thereof on the first end plate 31 side. The cover member 210 is disposed so as to cover the opening 31b for the first communicating hole 100b, and the opening 31f for the second communicating hole 100f, and a channel (first channel 211) that allows fluid to flow between these communicating holes is formed inside the cover member 210. That is, the first channel 211 is formed of the inner face of the cover member 210, and part of the surface of the first end plate 31. Therefore, it can be considered that the first channel 211 is a channel connecting, on the first end plate 31, the opening 31b for the first communicating hole 100b, and the opening 31f for the second communicating hole 100f to each other. The cover member 210 is fixed to the surface of the first end plate 31. Any method is used to fix the cover member 210 to the surface of the first end plate 31 without particular limitations. For example, the cover member 210 may be attached to the first end plate 31 with bolts or adhesive, or by welding. The shape of the cover member 210 is not limited to the mode in Fig. 6. The cover member 210 may have any shape as long as the first channel 211 can be formed thereinside.

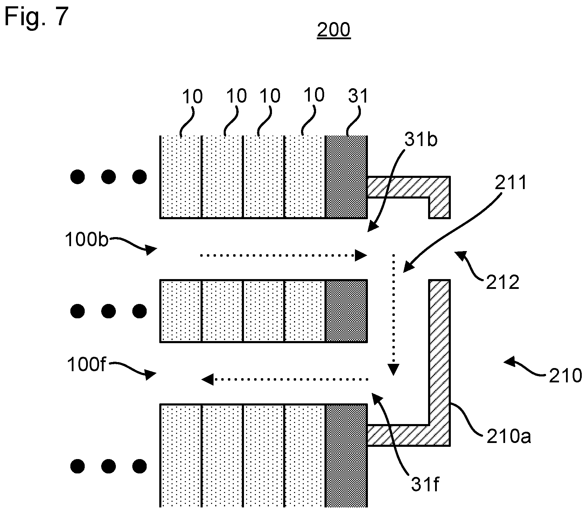

Fig. 7 is a cross-sectional view focusing on the first channel 211. Fig. 7 is a partial cross-sectional view if the first communicating hole 100b and the second communicating hole 100f were cut in the stacking direction. As shown in Fig. 7, hydrogen generated at the hydrogen electrodes 16 by water electrolysis flows from the first communicating hole 100b via the first channel 211 into the second communicating hole 100f. Then, hydrogen flowing into the second communicating hole 100f is fed to the inter-cell spaces 21. As described, in water electrolysis, hydrogen flows into the inter-cell spaces 21. Hydrogen fed to the inter-cell spaces 21 has a pressure equal to that in the hydrogen electrodes 16. Usually, the pressure of hydrogen generated at the hydrogen electrodes 16 is higher than that of the reaction water fed to the oxygen electrodes 15. Therefore, hydrogen flowing into the inter-cell spaces 21 may lead to suppressed deformation of the inter-cell space 21. Hydrogen flowing into the inter-cell spaces 21 passes through the second communicating hole 100e to be extracted to the outside.

As shown in Figs. 6 and 7, the cover member 210 may have, on an outer face 210a, an opening 212 that is connectable to the outside. This allows part of hydrogen discharged via the first communicating hole 100b to be fed to the second communicating hole 100f whereas allowing the rest of hydrogen to be extracted to the outside via the opening 212. According to this, the number of openings via which hydrogen can be extracted can be increased. However, the opening 212 is optional, and the cover member 210 may have no opening 212.

### (Sealing of Opening)

In the water electrolysis stack 200, a part of the openings via which hydrogen is extracted may be sealed. Specifically, the opening 31b for the first communicating hole 100b, and the opening 31f for the second communicating hole 100f are connected by the first channel 211 whereas the opening 31a for the first communicating hole 100a, which remains unconnected to the first channel 211, may be sealed. Any method is used to seal the opening 31a without particular limitations. For example, the opening 31a may be filled with resin. This disables hydrogen discharge via the opening 31a, so that the number of openings via which hydrogen is discharged is limited to allow the apparatus to be simplified.

When the opening 31a is sealed, and the cover member 210 have no opening 212, hydrogen generated at the hydrogen electrodes 16 by water electrolysis flows from the first commuting hole 100b via the first channel 211 into the second commuting hole 100f and the inter-cell spaces 21, and is discharged via the second commuting hole 100e, which remains unconnected to the first channel 211. In this case, hydrogen can be extracted via the opening 31e for the second communicating hole 100e only. According to this hydrogen backflow can be suppressed in addition to simplification of the apparatus.

The mechanism for suppressing hydrogen backflow is as follows. In water electrolysis, when the temperature of the water electrolysis stack 200 falls, the internal pressure in the water electrolysis cells 10 falls. Then, hydrogen once discharged from the water electrolysis stack 200 returns to the water electrolysis stack 200 again. Such a situation is not preferable in view of poisoning in the water electrolysis cells 10. In contrast, when the opening 31e for the second communicating hole 100e is the only opening via which hydrogen is discharged, hydrogen flows from the water electrolysis cells 10 (hydrogen electrodes 16) into, in the order mentioned, the first communicating hole 100b, the first channel 211, the second communicating hole 100f, the inter-cell spaces 21, and the second communicating hole 100e, and is discharged via the opening 31a. Therefore, even when hydrogen is sucked via the opening 31a due to the decreased internal pressure, hydrogen is difficult to reach the water electrolysis cells 10 (hydrogen electrodes 16) because it is necessary for hydrogen to pass through these communicating holes and the inter-cell spaces 21. As described, since these communicating holes and the inter-cell spaces 21, particularly the inter-cell spaces 21 which has a large capacity, function as a buffer, the effect of suppressing hydrogen backflow is exerted.

Even when the cover member 210 has the opening 212, the effect of suppressing hydrogen backflow is exerted. However, the effect of suppressing hydrogen backflow is remarkably improved when the cover member 210 does not have the opening 212 (when hydrogen is discharged via the opening 31e only).

The water electrolysis stack 200 is provided with the two first communicating holes (100a and 100b) and the two second communicating holes (100e and 100f). However, the water electrolysis stack according to the present disclosure may be provided with three or a plurality of the first communicating holes. In this case, among the openings for the first communicating holes, any openings for the first communicating holes that remain unconnected to the first channel may be sealed. Among the remaining openings for the first communicating holes, at least one opening may be sealed, and all the openings may be sealed. The water electrolysis stack according to the present disclosure may be provided with three or a plurality of the second communicating holes. In this case, among the openings for the second communicating holes, and except the opening for the second communicating hole that is connected to the first channel and the opening for the second communicating hole that is for extracting hydrogen, any openings for the second communicating holes that remain unconnected to the first channel may be sealed. Among the remaining openings for the second communicating holes, at least one opening may be sealed, and all the openings may be sealed. However, in view of simplifying the apparatus, the numbers of the first communicating holes and the second communicating holes may be two, respectively.

The water electrolysis stack 200 which is the first embodiment has been described above. The water electrolysis stack 200 is provided with the first channel 211 whereby hydrogen may flow into the inter-cell spaces 21 in water electrolysis. Thus, the internal pressure in the inter-cell spaces 21 can be increased, and deformation of the inter-cell spaces 21 can be suppressed. Accordingly, the water electrolysis stack 200 is capable of improving durability.

### [Second Embodiment: Water Electrolysis Stack 300]

A water electrolysis stack 300 that is the second embodiment will be described. The water electrolysis stack 300 differs from the water electrolysis stack 200 in the following points. That is, the water electrolysis stack 200 has the first channel 211 (cover member 210) connecting, on the first end plate 31, the first communicating hole 100b and the second communicating hole 100f to each other, whereas the water electrolysis stack 300 has a first channel 310 connecting the first communicating hole 100b and the second communicating hole 100f to each other at a position away from the first end plate 31.

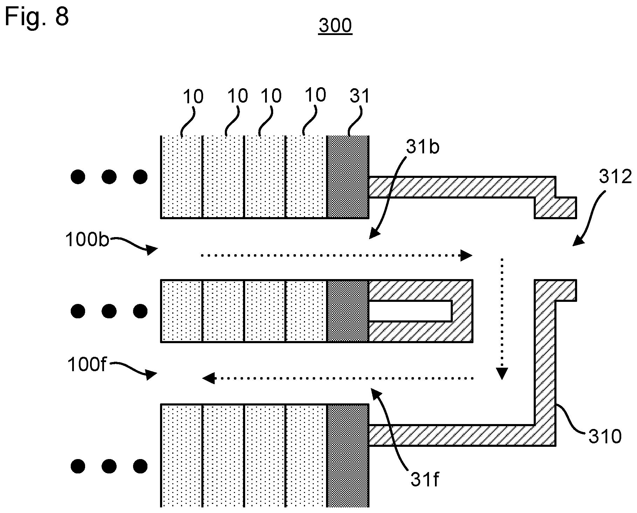

Fig. 8 is a cross-sectional view focusing on the first channel 310. As shown in Fig. 8, the first channel 310 is a pipe, and connects the first communicating hole 100b and the second communicating hole 100f to each other at a position away from the first end plate 31. According to this, the use of the first channel 310 may solve the following possible problem: the first communicating hole 100b and the second communicating hole 100f cannot be connected to each other on the first end plate 31. The first channel 310 may have an opening 312 that is connectable to the outside in the same manner as the cover member 210. Fig. 8 shows the first channel 310 having a C shape. The shape of the first channel 310 is however not limited to this. The first channel 310 may be formed of a single pipe, and may be formed of a plurality of pipes.

### [Third Embodiment: Water Electrolysis Stack 400]

A water electrolysis stack 400 that is the third embodiment will be described. The water electrolysis stack 400 differs from the water electrolysis stack 200 in the following points. That is, the water electrolysis stack 200 has the first channel 211 (cover member 210) connecting, on the first end plate 31, the first communicating hole 100b and the second communicating hole 100f to each other, whereas the water electrolysis stack 400 has a first channel connecting the first communicating hole 100b and the second communicating hole 100f to each other thereinside.

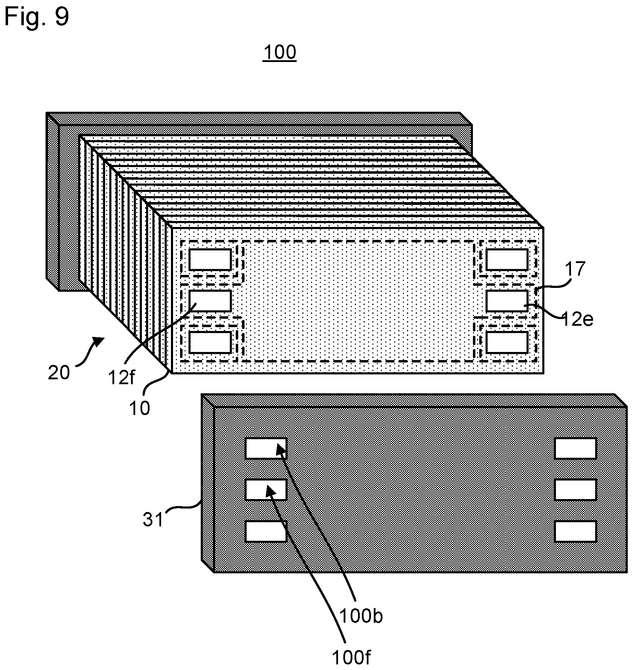

Fig. 9 is an exploded perspective view focusing on the cell stack 20 and the first end plate 31 in the water electrolysis stack 100. As described above, the sealing member 17 is arranged on the outer face of each of the water electrolysis cells 10 (oxygen electrode separators 12). Usually, the sealing member 17 is all over the second holes 12e and 12f, and the central portion (area corresponding to the position of the electrode body 11). **In** contrast, the present inventors found that changing the mode of this sealing member 17 allows the first communicating hole 100b and the second communicating hole 100f to be connected to each other inside the water electrolysis stack 400.

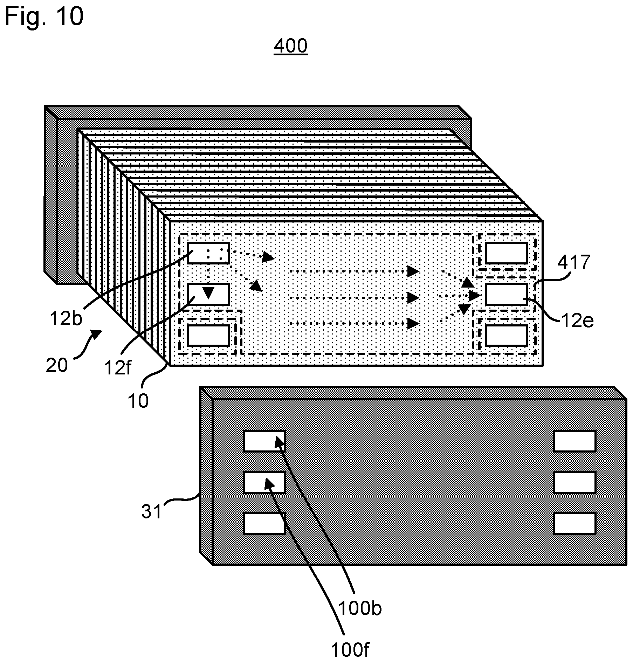

Fig. 10 is an exploded perspective view focusing on the cell stack 20 and the first end plate 31 in the water electrolysis stack 400. As shown in Fig. 10, a sealing member 417 that is over the first hole 12b in addition to the second holes 12e and 12f, and the central portion is disposed on the outer face of the water electrolysis cell 10 (oxygen electrode separator 12) disposed at the furthest end face of the cell stack 20. This allows the first communicating hole 100b and the second communicating hole 100f to be connected to each other inside the water electrolysis stack 400. The first communicating holes 100b and 100e can be also connected to each other. Therefore, it can be considered that a channel (communicating hole) connecting these communicating holes is the first channel in the water electrolysis stack 400. The structure of the apparatus may be further simplified by connecting the first communicating hole 100b, and either one of the second communicating hole 100e and 100f to each other inside the water electrolysis stack 400 as described.

In the water electrolysis stack 400, the sealing member 417 is disposed on the water electrolysis cell 10 disposed at the end face of the cell stack 20. The sealing member 417 may be disposed on any of the water electrolysis cells 10 inside the cell stack 20. In other words, the sealing members 17 disposed between the water electrolysis cells 10 may be changed to the sealing members 417. Even in this case, the first communicating hole 100b and the second communicating hole 100f can be connected to each other inside the water electrolysis stack 400.

### [Fourth Embodiment: Water Electrolysis Stack 500]

A water electrolysis stack 500 that is the fourth embodiment will be described. The water electrolysis stack 500 differs from the water electrolysis stack 200 in the following points. That is, the water electrolysis stack 200 has the first channel 211 (cover member 210) connecting the first communicating hole 100b and the second communicating hole 100f to each other, whereas the water electrolysis stack 500 has a first channel 511 (cover member 510) connecting the first communicating hole 100a and the second communicating hole 100e to each other. As described, the water electrolysis stack 500 and the water electrolysis stack 200 are different in position of the first channel.

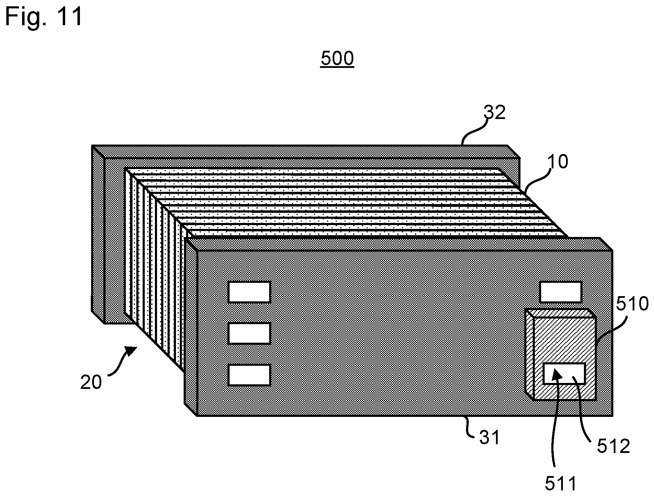

Fig. 11 is a perspective view of the water electrolysis stack 500. As shown in Fig. 11, the water electrolysis stack 500 is provided with the cover member 510 on the first end plate 31. The shape of the cover member 510 is the same as the cover member 210. The cover member 510 is disposed so as to cover the opening 31a for the first communicating hole 100a, and the opening 31e for the second communicating hole 100e, and a channel (first channel 511) that allows fluid to flow between these communicating holes is formed inside the cover member 510. That is, the first channel 511 is formed of the inner face of the cover member 510, and part of the surface of the first end plate 31. The mode of the first channel 511 is the same as the first channel 211. Therefore, it can be considered that the first channel 511 is a channel connecting, on the first end plate 31, the opening 31a for the first communicating hole 100a, and the opening 31e for the second communicating hole 100e to each other.

The use of the cover member 510 causes hydrogen to flow as follows. That is, hydrogen generated at the hydrogen electrodes 16 by water electrolysis flows from the first communicating hole 100a via the first channel 511 into the second communicating hole 100e. Then, hydrogen flowing into the second communicating hole 100e is fed to the inter-cell spaces 21. Therefore, in water electrolysis, hydrogen flows into the inter-cell spaces 21. Hydrogen flowing into the inter-cell spaces 21 passes through the second communicating hole 100f to be discharged to the outside. As described, the water electrolysis stack 500 exerts the same effect as the water electrolysis stack 200.

In contrast, due to the difference in arrangement position of the first channel, the effect of the water electrolysis stack 200, and that of the water electrolysis stack 500 are different in the following points.

In the water electrolysis stack 200, hydrogen generated at the hydrogen electrodes 16 by water electrolysis flows from the first communicating hole 100b via the first channel 211 to the second communicating hole 100f, and flows into the inter-cell spaces 21. Then, hydrogen is discharged via the second communicating hole 100e. As is apparent from Fig. 4, the second communicating hole 100e is the second communicating hole closest to the reaction water feeding communicating hole 100c. Since a water electrolysis reaction is an exothermic reaction, the temperature of the generated hydrogen is higher than that of the reaction water fed to the water electrolysis stack 200. Therefore, the hydrogen temperature can be dropped by passing to discharge hydrogen through the second communicating hole 100e which is closest to the reaction water feeding communicating hole 100c. Hydrogen generated by water electrolysis may be preserved in a hydrogen tank. In this case, hydrogen may be compressed to be preserved. When a higher temperature and a certain pressure of hydrogen is compared with a lower temperature and the same pressure of hydrogen, efficiency in compressing the lower temperature of hydrogen is higher than efficiency in compressing the higher temperature of hydrogen. Therefore, when hydrogen is compressed to be preserved, the hydrogen temperature is preferably low.

In contrast, in the water electrolysis stack 500, hydrogen generated at the hydrogen electrodes 16 by water electrolysis flows from the first communicating hole 100a via the first channel 511 to the second communicating hole 100e, and flows into the inter-cell spaces 21. Then, hydrogen is discharged via the second communicating hole 100f. As is apparent from Fig. 4, the second communicating hole 100f is the second communicating hole closest to the reaction water discharge communicating hole 100d. As described above, since a water electrolysis reaction is an exothermic reaction, the temperature of the reaction water discharged via the water electrolysis stack 500 is higher than that of the reaction water fed to the water electrolysis stack 500. Therefore, the temperature of hydrogen discharged via the second communicating hole 100f is higher than the temperature of hydrogen discharged via the second communicating hole 100e. When generated hydrogen is immediately combusted as a heat source, or when ammonia, methane, or the like is produced, the hydrogen temperature is preferably high.

Here, the water electrolysis stack 500 uses the first channel 511 formed on the first end plate 31. The mode of a first channel that can be applied to the water electrolysis stack 500 is however not limited to this. For example, the first channel of the water electrolysis stack 500 may have the same structure as the first channel 310, which is a pipe, and may have the same structure as a first channel that is a communicating hole. Even with either structure, the same effect may be exerted.

### [Fifth Embodiment]

The fifth embodiment of the water electrolysis stack according to the present disclosure will be described. The fifth embodiment differs from the water electrolysis stack 200 in the following points. That is, in the water electrolysis stack 200, hydrogen flows into the inter-cell spaces 21 by the use of the first channel 211 (cover member 210), whereas in the fifth embodiment, a gas is fed from the outside to the second communicating hole 100e or the second communicating hole 100f to flow into the inter-cell spaces 21. In other words, in the fifth embodiment, the water electrolysis stack 100 can be used as it is.

Any method is used to feed a gas to the second communicating hole 100e or the second communicating hole 100f without particular limitations. For example, the undermentioned gas feeder may be used. The kind of a gas to be introduced into the inter-cell spaces 21 is not particularly limited, and examples thereof include air, oxygen, hydrogen, and inert gases (such as nitrogen).

The pressure of the gas to be introduced into the inter-cell spaces 21 is not particularly limited. However, too low a pressure of the gas leads to a weaker effect of suppressing deformation of the inter-cell spaces 21. When the pressure in the oxygen electrodes 15 is compared with the pressure in the hydrogen electrodes 16, typically, the pressure in the hydrogen electrodes 16 is higher. Therefore, in view of this relationship, the pressure of the gas to be fed to the inter-cell spaces 21 may be at least the pressure in the oxygen electrodes 15. In view of remarkably suppressing deformation of the inter-cell spaces 21, the pressure of the gas to be fed to the inter-cell spaces 21 may be at least 90% of the pressure in the hydrogen electrodes 16, and may be at least the pressure in the hydrogen electrodes 16. The upper limit of the pressure of the gas to be fed to the inter-cell spaces 21 is not particularly limited. However, in view of loads to be applied to the water electrolysis stack, the pressure of the gas to be fed to the inter-cell spaces 21 may be at most 110% of the pressure in the hydrogen electrodes 16.

When the pressure in the oxygen electrodes 15 is higher than that in the hydrogen electrodes 16, the pressure of the gas to be fed to the inter-cell spaces 21 may be at least the pressure in the hydrogen electrodes 16, may be at least 90% of the pressure in the oxygen electrodes 15, and may be at least the pressure in the oxygen electrodes 15. The pressure of the gas to be fed to the inter-cell spaces 21 may be at most 110% of the pressure in the oxygen electrodes 16.

The pressure in the oxygen electrodes 15 is equal to the pressure of the reaction water fed to the water electrolysis stack 100. A pressure measurement device is capable of measuring the reaction water pressure. Alternatively, the pressure of a reaction water feeder feeding the reaction water may be referred to. The pressure in the hydrogen electrodes 16 is equal to the pressure of hydrogen discharged from the water electrolysis stack 100. A pressure measurement device is capable of measuring the pressure of hydrogen discharged from the water electrolysis stack 100.

The water electrolysis stack according to the present disclosure has been described above using each embodiment. The water electrolysis stack according to the present disclosure allows a gas to flow into the inter-cell spaces 21 in water electrolysis. This may lead to suppressed deformation of the inter-cell spaces to improve the durability of the water electrolysis stack.

### (C) Typical Water Electrolysis System

First, prior to description of a water electrolysis system according to the present disclosure, a typical water electrolysis system is described using a water electrolysis system 1000 that is one example. The water electrolysis system 1000 uses the water electrolysis stack 100.

### [Water Electrolysis System 1000]

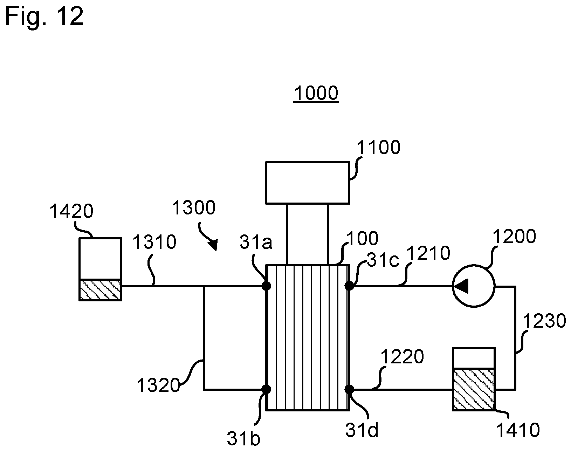

Fig. 12 is a block diagram of the water electrolysis system 1000. As shown in Fig. 12, the water electrolysis system 1000 is provided with the water electrolysis stack 100, a power source 1100, a reaction water feeder 1200, a reaction water feeding channel 1210, a reaction water discharge channel 1220, and a hydrogen discharge channel 1300. The water electrolysis system 1000 may be also provided with gas-liquid separators 1410 and 1420. The water electrolysis system 1000 may be further provided with a circulation channel 1230 for circulating a reaction water.

### <Water Electrolysis Stack 100>

Since the water electrolysis stack 100 has been described above, description thereof will be omitted here.

### <Power Source 1100>

The power source 1100 is a device for supplying direct current to the water electrolysis stack 100. Such a power source 1100 is known. A current flowing into the water electrolysis stack 100 while a reaction water is fed to the water electrolysis stack 100 causes water electrolysis.

### <Reaction Water Feeder 1200>

The reaction water feeder 1200 is a device that feeds the reaction water to the oxygen electrodes 15 of the water electrolysis stack 100. The reaction water feeder 1200 may apply pressure to feed the reaction water to the water electrolysis stack 100. An example of the reaction water feeder 1200 is a known pump.

### <Reaction Water Feeding Channel 1210>

The reaction water feeding channel 1210 is a pipe connecting the water electrolysis stack 100 and the reaction water feeder 1200 to each other. The reaction water feeding channel 1210 serves, so that the reaction water fed from the reaction water feeder 1200 flows therethrough to the water electrolysis stack 100. The reaction water feeding channel 1210 is connected to the opening 31c for the reaction water feeding communicating hole 100c of the water electrolysis stack 100.

### <Reaction Water Discharge Channel 1220>

The reaction water discharge channel 1220 is a pipe connected to the water electrolysis stack 100. When the water electrolysis system 1000 is provided with the gas-liquid separator 1410, the reaction water discharge channel 1220 connects the water electrolysis stack 100 and the gas-liquid separator 1410 to each other. The reaction water discharge channel 1220 serves, so that the reaction water discharged from the water electrolysis stack 100 flows therethrough. The reaction water discharge channel 1220 is connected to the opening 31d for the reaction water discharge communicating hole 100d of the water electrolysis stack 100.

### <Hydrogen Discharge Channel 1300>

The hydrogen discharge channel 1300 is a pipe connected to the water electrolysis stack 100. When the water electrolysis system 1000 is provided with the gas-liquid separator 1420, the hydrogen discharge channel 1300 connects the water electrolysis stack 100 and the gas-liquid separator 1420 to each other. The hydrogen discharge channel 1300 serves, so that hydrogen discharged from the water electrolysis stack 100 flows therethrough. The reaction water may also flow through the hydrogen discharge channel 1300. This is because the reaction water may permeate through the electrode bodies 11 to move from the oxygen electrodes 15 to the hydrogen electrodes 16. For this, the water electrolysis system 1000 may be provided with the gas-liquid separator 1420 for removing the reaction water flowing through the hydrogen discharge channel 1300.

As shown in Fig. 11, the hydrogen discharge channel 1300 has a first pipe 1310 and a second pipe 1320. The first pipe 1310 is connected to the opening 31a for the first communicating hole 100a of the water electrolysis stack 100. When the water electrolysis system 1000 is provided with the gas-liquid separator 1420, the first pipe 1310 connects the opening 31a for the first communicating hole 100a of the water electrolysis stack 100, and the gas-liquid separator 1420 to each other. The second pipe 1320 connects the opening 31b for the first communicating hole 100b of the water electrolysis stack 100, and the first pipe 1310 to each other.

### <Gas-Liquid Separators 1410 and 1420>

The gas-liquid separators 1410 and 1420 are devices each having the function of separating gas and liquid components. The gas-liquid separator 1410 separates oxygen from the reaction water fed from the reaction water discharge channel 1220. The separated reaction water may be sent to the reaction water feeder 1200 via the circulation channel 1230, and may be discharged to the outside. Separated oxygen may be sent to an oxygen tank, and may be discharged to the outside. The gas-liquid separator 1420 separates hydrogen from the reaction water fed from the hydrogen discharge channel 1300. The separated reaction water may be discharged to the outside. Separated hydrogen may be sent to a hydrogen tank, and may be discharged to the outside.

### <Circulation Channel 1230>

The circulation channel 1230 is a pipe connecting the gas-liquid separator 1410 and the reaction water feeder 1200 to each other. The circulation channel 1230 serves, so that the reaction water separated by the gas-liquid separator 1410 flows therethrough. Providing the circulation channel 1230 allows the reaction water to be circulated through the water electrolysis stack 100 and the reaction water feeder 1200.

### (D) Water Electrolysis System according to Present Disclosure

Next, a water electrolysis system using the water electrolysis stack according to the present disclosure will be described using each embodiment.

### [First Embodiment: Water Electrolysis System 2000]

A water electrolysis system 2000 that is the first embodiment will be described. The water electrolysis system 2000 differs from the water electrolysis system 1000 mainly in that the water electrolysis stack 100 is changed to the water electrolysis stack 200. Hereinafter, points different from the water electrolysis system 1000 will be only described.

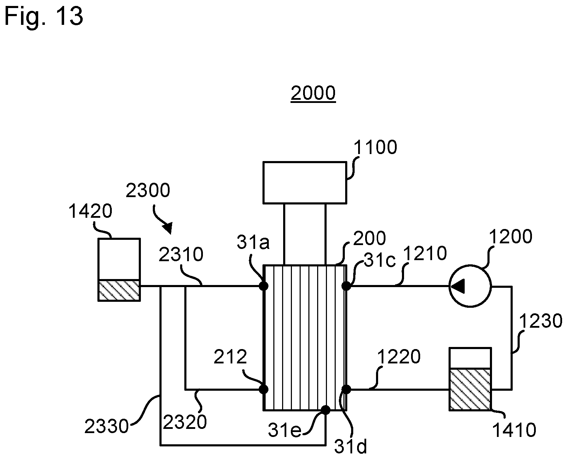

Fig. 13 is a block diagram of the water electrolysis system 2000. As shown in Fig. 13, the water electrolysis system 2000 is provided with the water electrolysis stack 200. The water electrolysis system 2000 has a hydrogen discharge channel 2300 instead of the hydrogen discharge channel 1300. The hydrogen discharge channel 2300 has a first pipe 2310, a second pipe 2320, and a third pipe 2330.

In the water electrolysis stack 200, hydrogen generated by water electrolysis flows from the first communicating hole 100b via the first channel 211 to the second communicating hole 100f to flow into the inter-cell spaces 21, and thereafter, is discharged via the second communicating hole 100e (opening 31e). In addition, hydrogen is discharged via the first communicating hole 100a (opening 31a). Further, hydrogen is discharged via the opening 212 of the cover member 210. As described, in the water electrolysis stack 200, there are three openings via which hydrogen is discharged. Therefore, three pipes are required of the hydrogen discharge channel 2300.

As described above, the first pipe 2310 is connected to the opening 31a for the first communicating hole 100a of the water electrolysis stack 100. When the water electrolysis system 2000 is provided with the gas-liquid separator 1420, the first pipe 2310 connects the opening 31a for the first communicating hole 100a of the water electrolysis stack 100, and the gas-liquid separator 1420 to each other. The second pipe 2320 connects the opening 212 of the cover member 210, and the first pipe 2310 to each other. The third pipe 2330 connects the opening 31e for the second communicating hole 100e of the water electrolysis stack 100, and the first pipe 2310 to each other. This results in all the openings via which hydrogen is discharged, and the hydrogen discharge channel 2300 connected to each other.

Here, the opening 31a for the first communicating hole 100a of the water electrolysis stack 100 may be sealed. In this case, the hydrogen discharge channel 2300 may be provided with no first pipe 2310. Further, in this case, one may connect one of the second pipe 2320 and the third pipe 2330 to the gas-liquid separator 1420, and join the other pipe to the one pipe. When the cover member 210 is provided with no opening 212, the hydrogen discharge channel 2300 may be provided with no second pipe 2320.

The water electrolysis system 2000 has been described above. The water electrolysis system 2000 uses the water electrolysis stack 200. However, any of the water electrolysis stacks 300, 400 and 500 can be also applied to the water electrolysis system 2000. When the water electrolysis stack 500 is applied to the water electrolysis system 2000, it is necessary to appropriately change the mode of the hydrogen discharge channel because the openings via which hydrogen is discharged are different.

### [Second Embodiment: Water Electrolysis System 3000]

A water electrolysis system 3000 that is the second embodiment will be described. The water electrolysis system 3000 differs from the water electrolysis system 2000 in the following points. That is, the water electrolysis system 3000 is provided with a second channel 3500 connecting the first communicating holes 100a and 100b to each other, and a hydrogen feeder 3510. The water electrolysis system 3000, which is the second embodiment, may be also provided with a gas-liquid separator 3520.

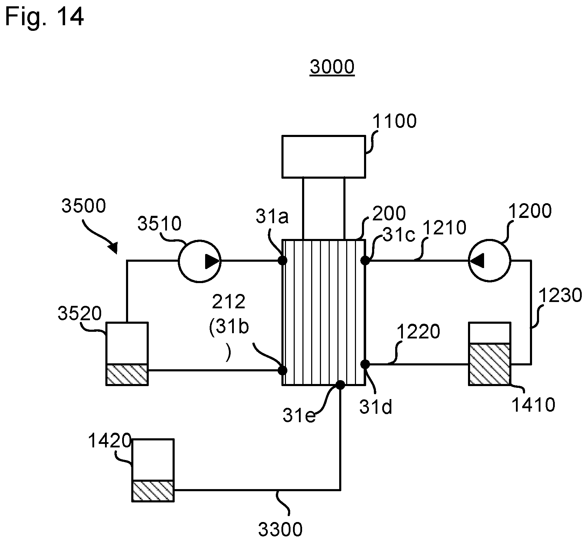

Fig. 14 is a block diagram of the water electrolysis system 3000. The second channel 3500 is a pipe connecting the first communicating holes 100a and 100b to each other. Actually, the electrolysis stack 200 is provided with the cover member 210 connecting the first communicating hole 100b and the second communicating hole 100f. Therefore, the second channel 3500 connects the opening 212 of the first channel 211, and the opening 31a for the first communicating hole 100a. This can cause the first communicating holes 100a and 100b to connect to each other in such a manner that a gas can flow therebetween. As shown in Fig. 14, the second channel 3500 may be formed of a plurality of pipes.

The hydrogen feeder 3510 is disposed at the second channel 3500, and applies pressure to hydrogen flowing through the second channel 3500. This causes hydrogen to circulate through the first communicating holes 100a and 100b. An example of the hydrogen feeder 3510 is a pump.

The gas-liquid separator 3520 is disposed at the second channel 3500 on the upstream side of the hydrogen feeder 3510 (first communicating hole 100b side). The gas-liquid separator 3520 separates hydrogen and the reaction water which are fed from the first communicating hole 100b. This is because, in addition to hydrogen generated by water electrolysis, the reaction water having permeated through the hydrogen electrodes 16 from the oxygen electrodes 15 also flows via the first communicating hole 100b.

The motion of hydrogen in the water electrolysis system 3000 will be described. Hydrogen generated at the hydrogen electrodes 16 by water electrolysis flows from the first communicating hole 100b via the first channel 211 to the second communicating hole 100f to flow into the inter-cell spaces 21, and is discharged via the second communicating hole 100e. Meanwhile, hydrogen flows from the first communicating hole 100b through the opening 212 to the second channel 3500 to reach the hydrogen feeder 3510 via the gas-liquid separator 3520. Then, hydrogen is extruded with the hydrogen feeder 3510, flows to the first communicating hole 100a, flows to the hydrogen electrodes 16, and is fed to the first communicating hole 100b. As described, by using the second channel 3500, hydrogen circulates through the hydrogen electrodes 16 and the inter-cell spaces 21 via the first communicating holes 100a and 100b, and the second channel 3500. Therefore, the opening via which hydrogen is discharged is the opening 31e for the second communicating hole 100e.

As described above, according to the water electrolysis system 3000, hydrogen staying in the hydrogen electrodes 16 etc. can be swept by applying pressure to circulate hydrogen. In other words, staying hydrogen can be suppressed. Suppressed staying hydrogen may lead to improvement of the hydrogen feeding efficiency of the water electrolysis stack 200. According to the water electrolysis system 3000, the number of the openings via which hydrogen is discharged can be also reduced, which contributes to simplification of the apparatus.

As described above, in the fuel cell stack 200, the opening via which hydrogen is discharged is only the opening 31e for the second communicating hole 100e. Therefore, a hydrogen discharging channel 3300 may be provided with only a pipe connecting the opening 31e for the second communicating hole 100e of the water electrolysis stack 200.

The water electrolysis system 3000 has been described above. The water electrolysis system 3000 uses the water electrolysis stack 200. However, any of the water electrolysis stacks 300, 400 and 500 can be also applied to the water electrolysis system 3000. When the water electrolysis stack 500 is applied to the water electrolysis system 3000, it is necessary to appropriately change the mode of the hydrogen discharge channel because the openings via which hydrogen is discharged are different.

### [Third Embodiment: Water Electrolysis System 4000]

A water electrolysis system 4000 that is the third embodiment will be described. The water electrolysis system 4000 differs from the water electrolysis system 2000 in the following points. That is, the water electrolysis system 4000 is provided with a gas-liquid separator 4610, a third channel 4620, and an extrusion water feeder 4630. The water electrolysis system 4000 uses the water electrolysis stack 300.

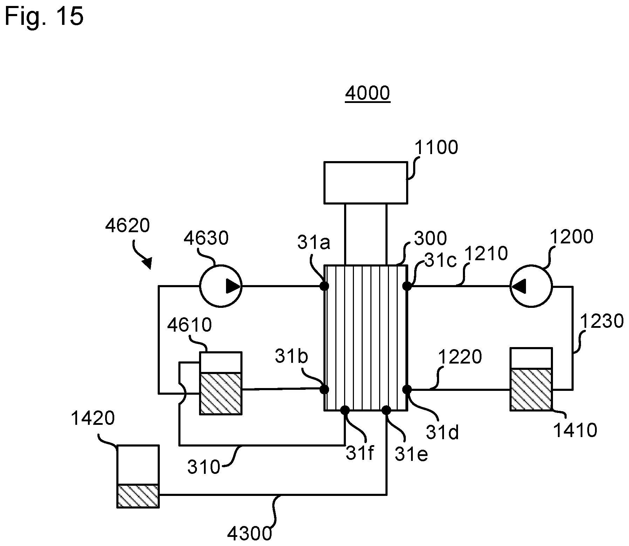

Fig. 15 is a block diagram of the water electrolysis system 4000. Fig. 15 also shows the first channel 210. The gas-liquid separator 4610 is disposed at the first channel 210. The third channel 4620 is a pipe connecting the gas-liquid separator 4610, and the opening 31a for the first communicating hole 100a which is not connected to the first channel 310. As shown in Fig. 15, the third channel 4620 may be formed of a plurality of pipes. The extrusion water feeder 4630 is disposed at the third channel 4620, and feeds an extrusion water (water) to the water electrolysis stack 300. An example of the extrusion water feeder 4630 is a pump. The hydrogen discharge channel 4300 is connected to the opening 31e for the second communicating hole 100e. In the water electrolysis system 4000, the hydrogen discharge channel 4300 may be formed of one pipe.

The motion of the extrusion water will be described. The extrusion water fed from the extrusion water feeder 4630 flows via the first communicating hole 100a into the hydrogen electrodes 16. The extrusion water having reached the hydrogen electrodes 16 is discharged via the first communicating hole 100b while accompanying hydrogen generated by water electrolysis. The extrusion water flowing through the first communicating hole 100b reaches the gas-liquid separator 4610 disposed at the first channel 310. At the gas-liquid separator 4610, hydrogen is separated from the extrusion water. Then, the extrusion water flows into the third channel 4620 to reach the extrusion water feeder 4630. As described, the extrusion water circulates through the hydrogen electrodes 16 and the gas-liquid separator 4610 via the first communicating holes 100a and 100b, the first channel 210, and the third channel 4620.

Hydrogen separated at the gas-liquid separator 4610 passes through the first channel 310 to flow into the inter-cell spaces 21 via the second communicating hole 100f. Hydrogen discharged from the inter-cell spaces 21 flows through the second communicating hole 100e to be discharged to the hydrogen discharge channel 4300. As described, hydrogen flows into the inter-cell spaces 21 in water electrolysis, which can improve the durability of the water electrolysis stack.

According to the water electrolysis system 4000, hydrogen staying in the hydrogen electrodes 16 etc. can be washed away by circulating an extrusion water. In other words, staying hydrogen can be suppressed. Suppressed staying hydrogen may lead to improvement of the hydrogen feeding efficiency of the water electrolysis stack 300. According to the water electrolysis system 4000, the opening via which hydrogen is discharged is only the opening 31e for the second communicating hole 100e. Therefore, the number of the openings via which hydrogen is discharged can be reduced, which contributes to simplification of the apparatus. Further, according to the water electrolysis system 4000, hydrogen is separated from the extrusion water in the first channel 310 by the use of the gas-liquid separator 4610. Then, only hydrogen flows into the inter-cell spaces 21, and is discharged via the second communicating hole 100e. Here, the second communicating hole 100e is the proximity to the reaction water feeding communicating hole 100c. Thus, the hydrogen temperature can be dropped by passing, through the second communicating hole 100e, to discharge hydrogen to the outside. This can significantly drop the hydrogen temperature in comparison with the case where hydrogen, and the extrusion water together are discharged via the second communicating hole 100e. This is because the heat capacity of hydrogen only is smaller than that of hydrogen and the extrusion water together. The effect of obtaining a low temperature of hydrogen has been described above.

The water electrolysis system 4000 has been described above. According to the water electrolysis system 4000, hydrogen can be efficiently extracted while the durability of the water electrolysis stack is improved.

### [Fourth embodiment: Water Electrolysis System 5000]

The water electrolysis system 5000 that is the fourth embodiment will be described. The water electrolysis system 4000 has the mode of providing the water electrolysis system 1000 with a gas feeder 5700.

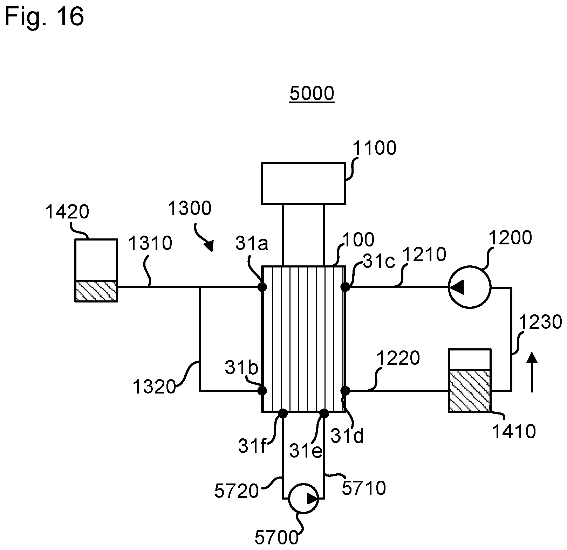

Fig. 16 is a block diagram of the water electrolysis system 5000. As shown in Fig. 16, the water electrolysis system 4000 is provided with the gas feeder 5700, a gas feeding channel 5710, and a gas discharge channel 5720.

The gas feeder 5700 is a device with which a gas is fed to the inter-cell spaces 21 of the water electrolysis stack 100. The kind of a gas to be introduced into the inter-cell spaces 21 is not particularly limited, and examples thereof include air, oxygen, hydrogen, and inert gases (such as nitrogen). An example of the gas feeder 5700 is a pump. The gas feeding channel 5710 connects the gas feeder 5700, and the opening of one of the second communicating holes 100e and 100f of the water electrolysis stack 100 to each other. The gas discharge channel 5720 connects the gas feeder 5700, and the opening of the other one of the second communicating holes 100e and 100f of the water electrolysis stack 100 to each other. In Fig. 16, the gas feeding channel 5710 connects the gas feeder 5700, and the opening 31e for the second communicating hole 100e of the water electrolysis stack 100 to each other. The gas discharge channel 5720 connects the gas feeder 5700, and the opening 31f for the second communicating hole 100f of the water electrolysis stack 100 to each other.

The pressure of the gas to be introduced into the inter-cell spaces 21 is not particularly limited. However, too low a pressure of the gas leads to a weaker effect of suppressing deformation of the inter-cell spaces 21. When the pressure in the oxygen electrodes 15 is compared with the pressure in the hydrogen electrodes 16, typically, the pressure in the hydrogen electrode 16 is higher. Therefore, in view of this relationship, the pressure of the gas to be fed to the inter-cell spaces 21 may be at least the pressure in the oxygen electrodes 15. In view of remarkably suppressing deformation of the inter-cell spaces 21, the pressure of the gas to be fed to the inter-cell spaces 21 may be at least 90% of the pressure in the hydrogen electrodes 16, and may be at least the pressure in the hydrogen electrodes 16. The upper limit of the pressure of the gas to be fed to the inter-cell spaces 21 is not particularly limited. However, in view of loads to be applied to the water electrolysis stack, the pressure of the gas to be fed to the inter-cell spaces 21 may be at most 110% of the pressure in the hydrogen electrodes 16.

When the pressure in the oxygen electrodes 15 is higher than that in the hydrogen electrodes 16, the pressure of the gas to be fed to the inter-cell spaces 21 may be at least the pressure in the hydrogen electrodes 16, may be at least 90% of the pressure in the oxygen electrodes 15, and may be at least the pressure in the oxygen electrodes 15. The pressure of the gas to be fed to the inter-cell spaces 21 may be at most 110% of the pressure in the oxygen electrodes 16.

The pressure in the oxygen electrodes 15 is equal to the pressure of the reaction water fed to the water electrolysis stack. A pressure measurement device is capable of measuring the reaction water pressure. Alternatively, the pressure of a reaction water feeder feeding the reaction water may be referred to. The pressure in the hydrogen electrodes 16 is equal to the pressure of hydrogen discharged from the water electrolysis stack. A pressure measurement device is capable of measuring the pressure of hydrogen discharged from the water electrolysis stack.

The water electrolysis system according to the present disclosure has been described above using each embodiment. The water electrolysis system according to the present disclosure allows a gas to flow into the inter-cell spaces in water electrolysis. This may lead to suppressed deformation of the inter-cell spaces to improve the durability of the water electrolysis stack.

### (E) Variations of Water Electrolysis Stack according to Present Disclosure

The aforementioned water electrolysis stacks each have the mode of a gas flowing into the inter-cell spaces in water electrolysis in order to increase the pressure in the inter-cell spaces to suppress deformation of the inter-cell spaces due to the pressures in the hydrogen or oxygen electrodes that are adjacent to the inter-cell spaces. In contrast, the same effect is considered to be exerted even when not a gas but a liquid (such as water) flows into the inter-cell spaces because such a liquid flow is capable of increasing the pressure in the inter-cell spaces. Then, some modes of a liquid flowing into the inter-cell spaces will be described below.

### [First Variation: Water Electrolysis Stack 600]

A water electrolysis stack 600 that is the first variation will be described. The water electrolysis stack 600 has the mode of providing the water electrolysis stack 100 with a fourth channel 611 (cover member 610). The fourth channel 611 connects the reaction water discharge communicating hole 100d and the second communicating hole 100f to each other.

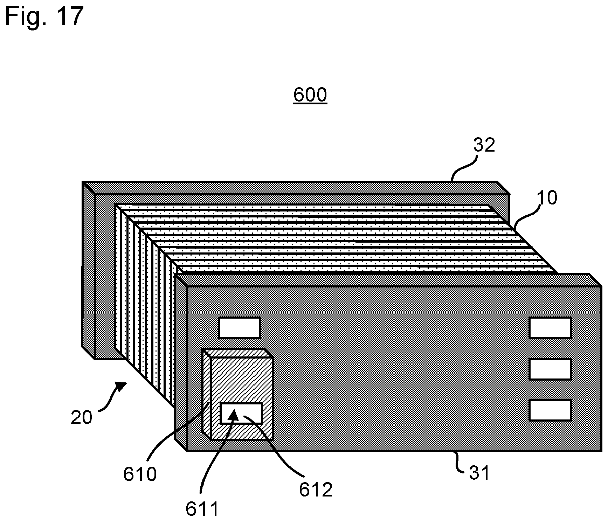

Fig. 17 is a perspective view of the water electrolysis stack 600. As shown in Fig. 17, the water electrolysis stack 600 is provided with the cover member 610 on the first end plate 31. The shape of the cover member 610 is the same as the cover member 210. The cover member 610 is disposed so as to cover the opening 31d for the reaction water discharge communicating hole 100d, and the opening 31f for the second communicating hole 100f, and a channel (fourth channel 611) that allows fluid to flow between these communicating holes is formed inside the cover member 610. That is, the fourth channel 611 is formed of the inner face of the cover member 610, and part of the surface of the first end plate 31. The mode of the fourth channel 611 is the same as the first channel 211. Therefore, it can be considered that the fourth channel 611 is a channel connecting, on the first end plate 31, the opening 31d for the reaction water discharge communicating hole 100d, and the opening 31f for the second communicating hole 100f.

The use of the cover member 610 causes a reaction water to flow as follows. That is, a reaction water flows from the reaction water discharge communicating hole 100d via the fourth channel 611 to the second communicating hole 100f to flow into the inter-cell spaces 21. The reaction water having passed through the respective inter-cell spaces 21 is discharged via the second communicating hole 100f. As described, in the water electrolysis stack 600, a reaction water flows into the inter-cell spaces 21 in water electrolysis. This can increase the internal pressure of the inter-cell spaces 21, which can improve the durability of the water electrolysis stack.

Normally, the reaction water pressure is lower than that in the hydrogen electrodes 16. Therefore, there is a possibility that the effect of suppressing deformation of the inter-cell spaces 21 cannot be sufficiently obtained even when a reaction water having a pressure as usual flows into the inter-cell spaces 21. In addition, a low pressure of a reaction water causes concern with reaction water backflow. Then, the pressure of the reaction water to be fed to the water electrolysis stack 600 may be increased more than the pressure as usual. For example, the reaction water pressure may be at least 90% of the pressure in the hydrogen electrodes 16, and may be at least the pressure in the hydrogen electrodes 16. The upper limit of the pressure of the gas fed to the inter-cell spaces 21 is not particularly limited. However, in view of loads to be applied to the water electrolysis stack, the reaction water pressure may be at most 110% of the pressure in the hydrogen electrodes 16. The reaction water pressure can be changed by adjusting the reaction water feeder.

The cover member 610 may be provided with an opening 612 that can be connected to the outside. This allows the reaction water to be discharged via the opening 612. For example, the opening 612 may have the structure same as the opening 212 of the cover member 210.

In the water electrolysis stack 600, the fourth channel 611 is formed by using the cover member 610. However, the mode of the fourth channel is not limited to this. For example, the fourth channel may have the same structure as the first channel 310, which is a pipe, and may have the same structure as the first channel, which is a communicating hole. Even with either structure, the same effect may be exerted.

The water electrolysis stack 600 uses the cover member 610 (fourth channel 611) connecting the opening 31d for the reaction water discharge communicating hole 100d, and the opening 31f for the second communicating hole 100f to each other. However, the position of the cover member (fourth channel) is not limited to this. The cover member 610 (fourth channel 611) may connect the opening 31c for the reaction water feeding communicating hole 100c, and the opening 31e for the second communicating hole 100e to each other. Even in this case, the reaction water flows into the inter-cell spaces 21. When the fourth channel connects the reaction water feeding communicating hole 100c and the second communicating hole 100e to each other, it is necessary for the cover member forming the fourth channel to be provided with an opening via which a reaction water is taken from the outside.

Variations of the water electrolysis stack according to the present disclosure have been described above using the first variation. In variations of the water electrolysis system according to the present disclosure, water is allowed to flow into the inter-cell spaces in water electrolysis. This may lead to suppressed deformation of the inter-cell spaces to improve the durability of the water electrolysis stack. These variations further contribute to simplification of the apparatus because the hydrogen electrodes 16 and the inter-cell spaces may share the reaction water.

### (F) Variations of Water Electrolysis System according to Present Disclosure

The aforementioned water electrolysis systems each have the mode of a gas flowing into the inter-cell spaces in water electrolysis. In contrast, water electrolysis systems of variations each have the mode of water flowing into the inter-cell spaces in water electrolysis. The same effect is considered to be exerted even when not a gas but a liquid (such as water) flows into the inter-cell spaces because such a liquid flow is capable of increasing the pressure in the inter-cell spaces. Then, some modes of water flowing into the inter-cell spaces will be described below.

### [First Variation: Water Electrolysis System 6000]

A water electrolysis system 6000 of the first variation will be described. The water electrolysis system 6000 differs from the water electrolysis system 1000 mainly in that the water electrolysis stack 100 is changed to the water electrolysis stack 600. Hereinafter, points different from the water electrolysis system 1000 will be only described.

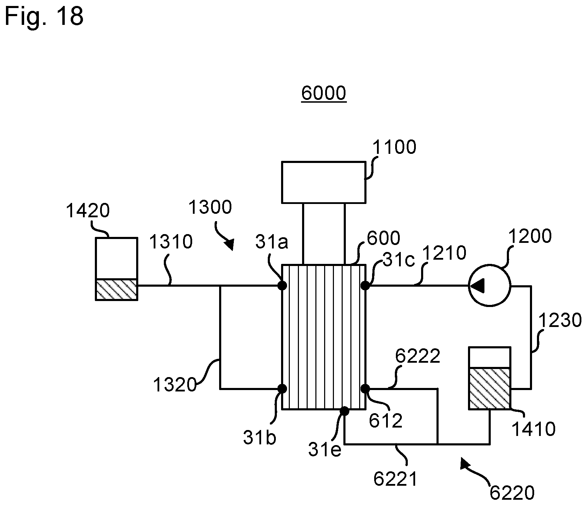

Fig. 18 is a block diagram of the water electrolysis system 6000. As shown in Fig. 18, the water electrolysis system 6000 has a reaction water discharge channel 6220 instead of the reaction water discharge channel 1220. The reaction water discharge channel 6220 is provided with a first pipe 6221 and a second pipe 6222.

The reaction water fed to the water electrolysis stack 600 flows from the reaction water feeding communicating hole 100c to the oxygen electrodes 15, flows from the reaction water discharge communicating hole 100d via the fourth channel 611 to the second communicating hole 100f, and flows into the inter-cell spaces 21. Then, the reaction water is discharged via the second communicating hole 100e. The reaction water is also discharged via the opening 612 of the cover member 610. As described, in the water electrolysis stack 600, there are two openings via which the reaction water is discharged. Therefore, the reaction water discharge channel 6220 has the two pipes.

The first pipe 6221 is connected to the opening 31e for the second communicating hole 100e of the water electrolysis stack 600. When the water electrolysis system 6000 is provided with the gas-liquid separator 1410, the first pipe 6221 connects the opening 31e for the second communicating hole 100e of the water electrolysis stack 600, and the gas-liquid separator 1410 to each other. The second pipe 6222 connects the opening 612 of the cover member 610, and the first pipe 6221 to each other. This results in all the openings via which the reaction water is discharged, and the reaction water discharge channel 6220 connected to each other. When the cover member 610 is provided with no opening 612, the reaction water discharge channel 6220 may include no second pipe 6222.

The water electrolysis system 6000 uses the water electrolysis stack 600 having the cover member 610 (fourth channel 611) connecting the reaction water discharge communicating hole 100d and the second communicating hole 100f to each other. However, a water electrolysis stack having, instead of the cover member 610, a cover member (fourth channel) connecting the reaction water feeding communicating hole 100c and the second communicating hole 100e to each other can be also applied to the water electrolysis system 6000. In this case, the reaction water is discharged via the reaction water discharge communicating hole 100d and the second communicating hole 100f. Therefore, when such a water electrolysis stack is applied, it is necessary to appropriately change the mode of the reaction water discharge channel because the openings via which the reaction water is discharged are different.

### [Second Variation: Water Electrolysis System 7000]

A water electrolysis system 7000 of the second variation will be described. The water electrolysis system 7000 differs from the water electrolysis system 2000 mainly in being provided with a fifth channel 7800. Hereinafter, points different from the water electrolysis system 2000 will be only described.

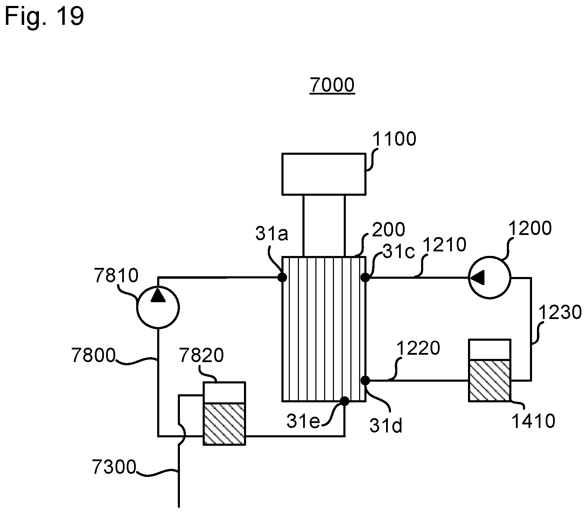

Fig. 19 is a block diagram of the water electrolysis system 7000. As shown in Fig. 19, the water electrolysis system 7000 is provided with the fifth channel 7800, an extrusion water feeder 7810, and a gas-liquid separator 7820.

The fifth channel 7800 is the pipe connecting the opening 31a for the first communicating hole 100a, which is not connected to the cover member 210, and the opening 31e for the second communicating hole 100e, which is not connected to the first channel 211. As shown in Fig. 19, the second channel 3500 may be formed of a plurality of pipes. The extrusion water feeder 7810 is disposed at the fifth channel 7800, and circulates an extrusion water through the water electrolysis stack 200. An example of the extrusion water feeder 7810 is a pump. The gas-liquid separator 7820 is disposed at the fifth channel 7800 on the upstream side of the extrusion water feeder 7810 (second communicating hole 100e). The hydrogen discharge channel 7300 is connected to the gas-liquid separator 7820. That is, the hydrogen discharge channel 7300 is formed of one pipe.

The motion of the extrusion water will be described. The extrusion water (water) fed from the extrusion water feeder 7810 flows from the fifth channel 7800 into the first communicating hole 100a to reach the hydrogen electrodes 16. The extrusion water having reached the hydrogen electrodes 16 is discharged via the hydrogen electrodes 16 while accompanying hydrogen generated by water electrolysis, flows from the first communicating hole 100b via the first channel 211 into the second communicating hole 100f, and flows into the inter-cell spaces 21. Then, the extrusion water passes from the inter-cell spaces 21 through the second communicating hole 100e to reach the fifth channel 7800. The extrusion water having reached the fifth channel 7800 is separated into hydrogen and the extrusion water by the use of the gas-liquid separator 7820. Separated hydrogen is discharged to the hydrogen discharge channel 7300. The separated extrusion water flows into the fifth channel 7800 to reach the extrusion feeder 7810. As described, in the water electrolysis system 7000, the extrusion water circulates through the hydrogen electrodes 16 and the inter-cell spaces 21 via the first communicating holes 100a and 100b, the second communicating holes 100e and 100f, and the fifth channel 7800. Hydrogen separated by the use of the gas-liquid separator 7820 may be sent to a hydrogen tank via the hydrogen discharge channel 7300.

According to the water electrolysis system 7000, hydrogen staying in the hydrogen electrodes 16 can be washed away by circulating an extrusion water. In other words, staying hydrogen can be suppressed. Suppressed staying hydrogen may lead to improvement of the hydrogen feeding efficiency of the water electrolysis stack 200. According to the water electrolysis system 7000, the opening via which hydrogen and the extrusion water together are discharged is only the opening 31e for the second communicating hole 100e. Therefore, the number of the openings via which hydrogen is discharged can be also reduced, which contributes to simplification of the apparatus. Further, according to the water electrolysis system 7000, the extrusion water is discharged via the second communicating hole 100e. Here, the second communicating hole 100e is the proximity to the reaction water feeding communicating hole 100c. Thus, the temperature of hydrogen separated from the extrusion water can be dropped by passing, through the second communicating hole 100e, to discharge the extrusion water to the outside. The effect of obtaining a low temperature of hydrogen has been described above.

Here, the water electrolysis system 7000 uses the cover member 210 having no opening 212. However, the water electrolysis system 7000 may use the cover member 210 having the opening 212. In this case, the extrusion water and hydrogen together are discharged via the opening 212. The extrusion water discharged via the opening 212 may be separated into hydrogen and the extrusion water at the gas-liquid separator. Separated hydrogen may be sent to a hydrogen tank via the hydrogen discharge channel. The separated extrusion water may be sent to the extrusion water feeder 7810.

The water electrolysis system 7000 has been described above. The water electrolysis system 7000 uses the water electrolysis stack 200. However, any of the water electrolysis stacks 300, 400 and 500 can be also applied to the water electrolysis system 7000. When the water electrolysis stack 500 is applied to the water electrolysis system 7000, the extrusion water may be also discharged via the opening 31b for the first communicating hole 100b and the opening 31f for the second communicating hole 100f. Therefore, when the water electrolysis stack 500 is applied, the opening 31b for the first communicating hole 100b, and the opening 31f for the second communicating hole 100f may be sealed.

Variations of the water electrolysis system according to the present disclosure have been described above using each of the variations. In variations of the water electrolysis system according to the present disclosure, water is allowed to flow into the inter-cell spaces in water electrolysis. This may lead to suppressed deformation of the inter-cell spaces to improve the durability of the water electrolysis stack.

### [Reference Signs List]

10 Water electrolysis cell
11 Electrode body
12 Oxygen electrode separator
13 Hydrogen electrode separator
14 Frame-shaped member
15 Oxygen electrode
16 Hydrogen electrode
17, 417 Sealing member
18a to 18d Sealing member
20 Cell stack
21 Inter-cell space
31 First end plate
31a to 31f Opening
32 Second end plate
100 to 600 Water electrolysis stack
100a, 100b First communicating hole
100c Reaction water feeding communicating hole
100d Reaction water discharge communicating hole
100e, 100f Second communicating hole
210, 510, 610 Cover member
211, 310, 511 First channel
611 Fourth channel
212, 312, 512, 612 Opening
1000 to 7000 Water electrolysis system
1100 Power source
1200 Reaction water feeder
1210 Reaction water feeding channel
1220 Reaction water discharge channel
1230 Circulation channel
1300 to 4300, 7300Hydrogen discharge channel
1310, 2310 First pipe
1320, 2320 Second pipe
2330 Third pipe
1410, 1420 Gas-liquid separator
3500 Second channel
3510 Extrusion water feeder
3520 Gas-liquid separator
4610 Gas-liquid separator
4620 Third channel
4630 Extrusion water feeder
5700 Gas feeder
5710 Gas feeding channel
5720 Gas discharge channel
6220 Reaction water discharge channel
6221 First pipe
6222 Second pipe
7800 Fifth channel
7810 Extrusion water feeder
7820 Gas-liquid separator
The claims of the parent application are reproduced below. These clauses define preferable combinations of features. The applicant reserves the right to pursue protection for these combinations of features, and/or any other subject-matter contained in the parent application as filed, either in the present divisional application or in a further application divided from the present divisional application. The claims of the parent application are not the claims of the current application which are contained in a separate section headed "claims".

### [Aspect 1]

A water electrolysis stack comprising:
a cell stack that is formed by stacking a plurality of water electrolysis cells, wherein
an inter-cell space is formed between each adjacent ones of the water electrolysis cells in the cell stack, and
gas flows through the inter-cell spaces in water electrolysis.

### [Aspect 2]

The water electrolysis stack according to aspect 1, wherein
the water electrolysis cells each comprise:
   an electrode body having an electrolyte membrane, an oxygen electrode catalyst layer that is disposed on one side of the electrolyte membrane, and a hydrogen electrode catalyst layer that is disposed on another side of the electrolyte membrane, the electrolyte membrane being sandwiched between the oxygen and hydrogen electrode catalyst layers;
   an oxygen electrode separator that is disposed on the electrode body on a side of
the oxygen electrode catalyst layer; and
   a hydrogen electrode separator that is disposed on the electrode body on a side of the hydrogen electrode catalyst layer,
in each of the water electrolysis cells, an oxygen electrode is formed between the electrode body and the oxygen electrode separator, and a hydrogen electrode is formed between the electrode body and the hydrogen electrode separator,
in said each adjacent ones of the water electrolysis cells, the oxygen electrode separator of one of the water electrolysis cells and the hydrogen electrode separator of another one of the water electrolysis cells are adjacent to each other, and the inter-cell space is formed between the oxygen electrode separator and the hydrogen electrode separator,
the water electrolysis stack further comprising:
   a first communicating hole that is connected to the hydrogen electrodes, and formed communicably in a stacking direction;
   a second communicating hole that is connected to the inter-cell spaces, and formed communicably in the stacking direction; and
   a first channel that connects the first communicating hole and the second communicating hole to each other, and
   hydrogen generated at the hydrogen electrodes by water electrolysis flows from the first communicating hole via the first channel to the second communicating hole to flow to the inter-cell spaces.

### [Aspect 3]

The water electrolysis stack according to aspect 2, further comprising:
a first end plate; and
a second end plate, the cell stack being sandwiched between the first and second end plates in the stacking direction, wherein
an opening for the first communicating hole and an opening for the second communicating hole are arranged in the first end plate, and
the first channel connects, on the first end plate, the opening of the first communicating hole and the opening of the second communicating hole.

### [Aspect 4]

The water electrolysis stack according to aspect 3, further comprising:
a plurality of the first communicating holes; and
a plurality of the second communicating holes, wherein
the openings for the first communicating holes, and the openings for the second communicating holes are arranged in the first end plate,
the first channel connects, on the first end plate, one of the openings for the first communicating holes and one of the openings for the second communicating holes to each other, and
among the openings for the first communicating holes, (an) opening(s) that remain(s) unconnected to the first channel is/are sealed.

### [Aspect 5]

The water electrolysis stack according to aspect 4, wherein
the first communicating holes are two and the second communicating holes are two in number.

### [Aspect 6]

The water electrolysis stack according to aspect 5, further comprising:
a reaction water feeding communicating hole; and
a reaction water discharge communicating hole, the reaction water feeding and discharge communicating holes being connected to the oxygen electrodes, and formed communicably in the stacking direction, wherein
hydrogen that flows into the inter-cell spaces is discharged via one of the second communicating holes which is closest to the reaction water feeding communicating hole.

### [Aspect 7]

The water electrolysis stack according to aspect 5, further comprising:
a reaction water feeding communicating hole; and
a reaction water discharge communicating hole, the reaction water feeding and discharge communicating holes being connected to the oxygen electrodes, and formed communicably in the stacking direction, wherein
hydrogen that flows into the inter-cell spaces is discharged via one of the second communicating holes which is closest to the reaction water discharge communicating hole.

### [Aspect 8]

A water electrolysis system comprising:
the water electrolysis stack according to aspect 2 or 3;
a second channel; and
a hydrogen feeder that is disposed at the second channel, wherein
in the water electrolysis stack, the first communicating holes are two, and the second communicating holes are two in number,
the second channel connects the first communicating holes to each other, and
hydrogen flows from one of the first communicating holes via the second channel into another one of the first communicating holes by use of the hydrogen feeder.

### [Aspect 9]

The water electrolysis system according to aspect 8, wherein
the water electrolysis stack further comprising:
   a reaction water feeding communicating hole; and
   a reaction water discharge communicating hole, the reaction water feeding and discharge communicating holes being connected to the oxygen electrodes, and formed communicably in the stacking direction, wherein
hydrogen that flows into the inter-cell spaces is discharged via one of the second communicating holes which is closest to the reaction water feeding communicating hole.

### [Aspect 10]

The water electrolysis system according to aspect 8, further comprising:
a gas-liquid separator that is disposed at the second channel on an upstream side of the hydrogen feeder.

### [Aspect 11]

A water electrolysis system comprising:
the water electrolysis stack according to aspect 2 or 3;
a gas-liquid separator;
a third channel; and
an extrusion water feeder that is disposed at the third channel, wherein
in the water electrolysis stack, the first communicating holes are two, and the second communicating holes are two in number,
the gas-liquid separator is disposed at the first channel,
the third channel connects the gas-liquid separator, and one of the first communicating holes which is unconnected to the first channel,
an extrusion water that is fed from the extrusion water feeder flows into the hydrogen electrodes via the one of the first communicating holes, is discharged via another one of the first communicating holes while accompanying hydrogen generated at the hydrogen electrodes by water electrolysis, reaches, from the other one of the first communicating holes, the gas-liquid separator disposed at the first channel, and flows into the third channel with hydrogen being separated therefrom at the gas-liquid separator, and
hydrogen separated at the gas-liquid separator flows into the inter-cell spaces via the one of the second communicating holes.

### [Aspect 12]

A water electrolysis system comprising:
the water electrolysis stack according to aspect 1; and
a gas feeder that feeds the gas to the inter-cell spaces.

### [Aspect 13]

A water electrolysis stack having a cell stack that is formed by stacking a plurality of water electrolysis cells, wherein
the water electrolysis cells each comprise:
   an electrode body having an electrolyte membrane, an oxygen electrode catalyst layer that is disposed on one side of the electrolyte membrane, and a hydrogen electrode catalyst layer that is disposed on another side of the electrolyte membrane, the electrolyte membrane being sandwiched between the oxygen and hydrogen electrode catalyst layers;
   an oxygen electrode separator that is disposed on the electrode body on a side of the oxygen electrode catalyst layer; and
   a hydrogen electrode separator that is disposed on the electrode body on a side of
the hydrogen electrode catalyst layer,
   in each of the water electrolysis cells, an oxygen electrode is formed between the electrode body and the oxygen electrode separator, and a hydrogen electrode is formed between the electrode body and the hydrogen electrode separator,
   in said each adjacent ones of the water electrolysis cells, the oxygen electrode separator of one of the water electrolysis cells and the hydrogen electrode separator of another one of the water electrolysis cells are adjacent to each other, and the inter-cell space is formed between the oxygen electrode separator and the hydrogen electrode separator,
   the water electrolysis stack comprises:
      a reaction water feeding communicating hole;
   a reaction water discharge communicating hole, the reaction water feeding and discharge communicating holes being connected to the oxygen electrodes, and formed communicably in a stacking direction;
   two second communicating holes that are connected to the inter-cell spaces, and formed communicably in the stacking direction; and
   a fourth channel that connects either one of the reaction water feeding communicating hole and the reaction water discharge communicating hole, and one of the second communicating holes, and
a reaction water flows via the fourth channel into the one of the second communicating hole to flow into the inter-cell spaces.

### [Aspect 14]

A water electrolysis system comprising:
a water electrolysis stack having a cell stack that is formed by stacking a plurality of water electrolysis cells;
a fifth channel; and
an extrusion water feeder that is disposed at the fifth channel, wherein
the water electrolysis cells each comprise:
   an electrode body having an electrolyte membrane, an oxygen electrode catalyst layer that is disposed on one side of the electrolyte membrane, and a hydrogen electrode catalyst layer that is disposed on another side of the electrolyte membrane, the electrolyte membrane being sandwiched between the oxygen and hydrogen electrode catalyst layers;
   an oxygen electrode separator that is disposed on the electrode body on a side of the oxygen electrode catalyst layer; and
   a hydrogen electrode separator that is disposed on the electrode body on a side of the hydrogen electrode catalyst layer,
in each of the water electrolysis cells, an oxygen electrode is formed between the electrode body and the oxygen electrode separator, and a hydrogen electrode is formed between the electrode body and the hydrogen electrode separator,
in said each adjacent ones of the water electrolysis cells, the oxygen electrode separator of one of the water electrolysis cells and the hydrogen electrode separator of another one of the water electrolysis cells are adjacent to each other, and the inter-cell space is formed between the oxygen electrode separator and the hydrogen electrode separator,
the water electrolysis stack comprises:
   two first communicating holes that are connected to the hydrogen electrodes, and formed communicably in a stacking direction;
   two second communicating holes that are connected to the inter-cell spaces, and formed communicably in the stacking direction; and
   a first channel that connects one of the first communicating holes and one of the second communicating holes to each other,
the fifth channel that connects another one of the first communicating holes which is unconnected to the first channel, and another one of the second communicating holes which is unconnected to the first channel, and
an extrusion water that is fed from the extrusion water feeder flows from the other one of the second communicating holes which is unconnected to the first channel via the fifth channel into the other one of the first communicating holes which is unconnected to the first channel to flow into the inter-cell spaces.

## Claims

1. A water electrolysis stack comprising:
a cell stack that is formed by stacking a plurality of water electrolysis cells, wherein
an inter-cell space is formed between each adjacent ones of the water electrolysis cells in the cell stack, and
liquid flows so as to increase an internal pressure in the inter-cell spaces in water electrolysis.

2. The water electrolysis stack according to claim 1, wherein
the water electrolysis cells each comprise:
an electrode body having an electrolyte membrane, an oxygen electrode catalyst layer that is disposed on one side of the electrolyte membrane, and a hydrogen electrode catalyst layer that is disposed on another side of the electrolyte membrane, the electrolyte membrane being sandwiched between the oxygen and hydrogen electrode catalyst layers;
an oxygen electrode separator that is disposed on the electrode body on a side of the oxygen electrode catalyst layer; and
a hydrogen electrode separator that is disposed on the electrode body on a side of the hydrogen electrode catalyst layer,
in each of the water electrolysis cells, an oxygen electrode is formed between the electrode body and the oxygen electrode separator, and a hydrogen electrode is formed between the electrode body and the hydrogen electrode separator,
in said each adjacent ones of the water electrolysis cells, the oxygen electrode separator of one of the water electrolysis cells and the hydrogen electrode separator of another one of the water electrolysis cells are adjacent to each other, and the inter-cell space is formed between the oxygen electrode separator and the hydrogen electrode separator, and
pressure of liquid in the inter-cell spaces is 90% to 110% of pressure in the hydrogen electrodes.

3. The water electrolysis stack according to claim 2, further comprising:
a reaction water feeding communicating hole;
a reaction water discharge communicating hole, the reaction water feeding and discharge communicating holes being connected to the oxygen electrodes, and formed communicably in a stacking direction;
two second communicating holes that are connected to the inter-cell spaces, and formed communicably in the stacking direction; and
a fourth channel that connects either one of the reaction water feeding communicating hole and the reaction water discharge communicating hole, and one of the second communicating holes,
the liquid is a reaction water, and
the reaction water flows via the fourth channel into the one of the second communicating hole to flow into the inter-cell spaces.
